(19) Europäisches Patentamt
European Patent Office
Office européen des brevets

(11) **EP 4 455 556 A1**

(12) **EUROPEAN PATENT APPLICATION**

(43) Date of publication:
**30.10.2024 Bulletin 2024/44**

(21) Application number: **24165792.3**

(22) Date of filing: **25.03.2024**

(51) International Patent Classification (IPC):
**F23R 3/00** $^{(2006.01)}$

(52) Cooperative Patent Classification (CPC):
**F23R 3/002; C23C 28/3215; C23C 28/322; C23C 28/345; C23C 28/3455; F23R 3/007**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **24.04.2023 GB 202305977**

(71) Applicant: **Rolls-Royce plc**
**London N1 9FX (GB)**

(72) Inventors:
• **Harding, Stephen**
  **Derby DE24 8BJ (GB)**
• **Brewster, James**
  **Derby DE24 8BJ (GB)**

(74) Representative: **Rolls-Royce plc**
**Moor Lane (ML-9)**
**PO Box 31**
**Derby DE24 8BJ (GB)**

(54) **INFRARED-REFLECTIVE COATINGS**

(57)    A component (100) for a hot section of an engine (16) comprises a substrate (101) and an infrared-reflective layer (105) configured to reflect infrared radiation away from the substrate (101).

Fig. 1

## Description

## Field

The present disclosure concerns components for a hot section of an engine, engines comprising such components, apparatus comprising such engines, and associated methods of manufacture.

## Background

Engine components can be exposed to very high temperatures during use. For example, combustors of modern aircraft gas turbines engines can be operated at temperatures in excess of 2000 °C. Such operating temperatures exceed the melting temperatures of the materials typically used to form gas turbine engine components. Very high temperatures can also be reached in other types of engine, including rocket engines and ramjet engines. Accordingly, measures are typically taken to protect engine components from exposure to hot engine gases and the engine flame.

For example, combustors of gas turbine engines typically include a cooling system, whereby cooling air is blown into the combustor through holes along the combustor walls, generating a cooling film of air which convectively isolates wall components from the hot engine gases. However, use of air for such cooling systems reduce the volume of air available for use in the fuel injector to control the combustion process. This can lead to reduced engine efficiency, increased production of soot and oxides of nitrogen, increased environmental impact and, for military aircraft, increased visibility. More efficient engine cooling systems would therefore be desirable.

Modern high-performance cooling systems have been developed which have complex cooling paths formed using additive manufacturing and/or advanced laser drilling techniques and often employ advanced high temperature materials. However, use of modern cooling systems can be restricted by the need to incorporate thermal barrier coatings (TBCs).

TBCs are layers of ceramic materials, such as yttria-stabilised zirconia (YSZ), which have low thermal conductivities. TBCs protect engine components from conductive heat transfer. However, TBCs are typically more than 100 $\mu$m thick (and often up to 1 mm or 2 mm thick), which can make it difficult to incorporate TBCs into modern additively-manufactured combustor components due to the need to introduce a pocket or recess to receive the TBC coating or risk blocking cooling system holes. Indeed, the space taken up to incorporate TBC recesses necessitates a longer pitch between sequential rows of cooling ports, thereby reducing overall cooling effectiveness. TBCs may also lack mechanical robustness at thicknesses of more than 100 $\mu$m (and up to 1 mm or 2 mm). TBCs also typically contain pores which can trap carbonaceous and silica deposits during engine operation and, in some cases, use of TBCs can cause intricate cooling systems to become blocked during the application process. Improved TBC systems, or removal of the need for TBCs altogether, would therefore be desirable to facilitate use of advanced cooling system designs.

## Summary of disclosure

According to a first aspect of the present disclosure, there is provided a component for a hot section of an engine, the component comprising a substrate and an infrared-reflective layer configured to reflect infrared radiation away from the substrate.

Combustion of fuel in engines, such as gas turbine engines, can produce significant amounts of infrared radiation. For example, high-temperature soot particles (produced from burning kerosene) radiate in the infrared, as do $CO_2$ and $H_2O$ molecules. Existing component cooling systems are not designed to shield components from infrared radiation, which typically passes through cooling air films and thermal barrier coatings (TBCs) and is absorbed by components, therefore leading to component heating. The inventors have found, however, that use of an infrared-reflective layer can substantially reduce this radiative heating effect. By shielding components from infrared radiative heating, it is also possible to use thinner TBCs or, indeed, to remove the need for TBCs altogether. This may facilitate the use of more efficient, but structurally more complex, additively-manufactured or laser-drilled air cooling systems, which are not suited for use with TBCs. Such cooling systems produce cooling air films with very high film effectiveness (i.e. they allow very little convective heat transfer). When combined with an infrared-reflective layer to reflect infrared radiation (such that little or no TBC material, or other low thermal conductivity layer, is required), TBC recesses or pockets do not have to be incorporated into the component structures, enabling even more efficient cooling system designs.

It will be appreciated that infrared radiation is electromagnetic radiation in the infrared portion of the electromagnetic spectrum. Infrared radiation has a wavelength $\lambda$ no less than about 700 nm and no greater than about 1 mm, corresponding to a frequency $\nu$ no greater than about 430 THz and no less than about 300 GHz.

The infrared-reflective layer may be configured to reflect infrared radiation in at least one region of the infrared portion of the electromagnetic spectrum. For example, the infrared-reflective layer may be configured to reflect infrared radiation in one single region of the infrared portion of the electromagnetic spectrum. Alternatively, the infrared-reflective layer may be configured to reflect infrared radiation in two or more (i.e., spectrally distinct) regions of the infrared portion of the electromagnetic spectrum.

The at least one region (e.g., the one single region or each of the two or more regions) of the infrared portion of the electromagnetic spectrum may have a spectral width, in terms of wavelength, of no less than about 1 nm, for example, no less than about 10 nm, or no less than about 50 nm, or no less than about 100 nm, or no less than about 500 nm, or no less than about 1 $\mu$m, or no less than about 10 $\mu$m, or no less than about 50 $\mu$m, or no less than about 100 $\mu$m, or no less than about 500 $\mu$m. The at least one region (e.g., the one single region or each of the two or more regions) of the infrared portion of the electromagnetic spectrum may have a spectral width, in terms of wavelength, of no more than about 500 $\mu$m, for example, no more than about 100 $\mu$m, or no more than about 50 $\mu$m, or no more than about 10 $\mu$m, or no more than about 1 $\mu$m, or no more than about 500 nm, or no more than about 100 nm, or no more than about 50 nm, or no more than about 10 nm. The at least one region (e.g., the one single region or each of the two or more regions) of the infrared portion of the electromagnetic spectrum may have a spectral width, in terms of wavelength, from about 1 nm to about 500 $\mu$m, for example, from about 10 nm to about 500 $\mu$m, or from about 50 nm to about 500 $\mu$m, or from about 100 nm to about 500 $\mu$m, or from about 1 $\mu$m to about 500 $\mu$m, or from about 10 $\mu$m to about 500 $\mu$m, or from about 50 $\mu$m to about 500 $\mu$m, or from about 100 $\mu$m to about 500 $\mu$m, or from about 1 nm to about 100 $\mu$m, or from about 1 nm to about 50 $\mu$m, or from about 1 nm to about 10 $\mu$m, or from about 1 nm to about 1 $\mu$m, or from about 1 nm to about 500 nm, or from about 1 nm to about 100 nm, or from about 1 nm to about 50 nm, or from about 1 nm to about 10 nm, or from about 10 nm to about 100 $\mu$m, or from about 10 nm to about 50 $\mu$m, or from about 10 nm to about 10 $\mu$m, or from about 10 nm to about 1 $\mu$m, or from about 10 nm to about 500 nm, or from about 10 nm to about 100 nm, or from about 10 nm to about 50 nm, or from about 10 nm to about 10 nm.

The at least one region (e.g., the one single region) of the infrared portion may comprise (e.g., span or be) substantially the entire infrared portion of the electromagnetic spectrum. That is to say, the infrared-reflective layer may be configured to reflect infrared radiation across substantially all of (e.g., across the entirety of) the infrared portion of the electromagnetic spectrum.

The infrared-reflective layer may be configured to reflect near-infrared radiation away from the substrate. Near-infrared radiation is electromagnetic radiation having a wavelength $\lambda$ from about 700 nm to about 1.4 $\mu$m.

The infrared-reflective layer may be configured to reflect short-wavelength infrared radiation away from the substrate. Short-wavelength infrared radiation is electromagnetic radiation having a wavelength $\lambda$ from about 1.4 $\mu$m to about 3 $\mu$m.

The infrared-reflective layer may be configured to reflect mid-wavelength infrared radiation away from the substrate. Mid-wavelength infrared radiation is electromagnetic radiation having a wavelength $\lambda$ from about 3 $\mu$m to about 8 $\mu$m.

The infrared-reflective layer may be configured to reflect long-wavelength infrared radiation away from the substrate. Long-wavelength infrared radiation is electromagnetic radiation having a wavelength $\lambda$ from about 8 $\mu$m to about 15 $\mu$m.

The infrared-reflective layer may be configured to reflect far infrared radiation away from the substrate. Far infrared radiation is electromagnetic radiation having a wavelength $\lambda$ from about 15 $\mu$m to about 1 mm.

The infrared-reflective layer may be configured reflect: (a) near-infrared radiation and short-wavelength infrared radiation; (b) short-wavelength infrared radiation and mid-wavelength infrared radiation; (c) mid-wavelength infrared radiation and long-wavelength infrared radiation; (d) long-wavelength infrared radiation and far infrared radiation; (e) near-infrared radiation, short-wavelength infrared radiation and mid-wavelength infrared radiation; (f) short-wavelength infrared radiation, mid-wavelength infrared radiation and long-wavelength infrared radiation; (g) mid-wavelength infrared radiation, long-wavelength infrared radiation and far infrared radiation; (h) near-infrared radiation, short-wavelength infrared radiation, mid-wavelength infrared radiation and long-wavelength infrared radiation; (i) short-wavelength infrared radiation, mid-wavelength infrared radiation, long-wavelength infrared radiation and far infrared radiation; or (j) near-infrared radiation, short-wavelength infrared radiation, mid-wavelength infrared radiation, long-wavelength infrared radiation and far infrared radiation.

In addition to reflecting infrared radiation, the infrared-reflective layer may be configured to reflect non-infrared electromagnetic radiation (i.e., electromagnetic radiation outside the infrared portion of the electromagnetic spectrum) away from the substrate. For example, the infrared-reflective layer may be configured to reflect electromagnetic radiation in the visible portion of the electromagnetic spectrum (i.e., visible radiation (i.e., light)) away from the substrate.

Visible radiation (i.e., light) has a wavelength $\lambda$ no less than about 400 nm and no greater than about 700 nm, corresponding to a frequency $\nu$ no greater than about 750 THz and no less than about 430 GHz.

The infrared-reflective layer may be configured to reflect visible radiation (i.e., light) in at least one region of the visible portion of the electromagnetic spectrum. For example, the infrared-reflective layer may be configured to reflect visible radiation (i.e. light) in one single region of the visible portion of the electromagnetic spectrum. Alternatively, the infrared-reflective layer may be configured to reflect visible radiation (i.e., light) in two or more (i.e., spectrally distinct) regions of the visible portion of the electromagnetic spectrum.

The at least one region (e.g., the one single region or each of the two or more regions) of the visible portion of the electromagnetic spectrum may have a spectral width, in terms of wavelength, of no less than about 1 nm, for example, no less than about 10 nm, or no less than about 50 nm, or no less than about 100 nm, or no less than about 200 nm, or no less than about 300 nm. The at least one region (e.g., the one single region or each of the two or more regions) of the visible portion of the electromagnetic spectrum may have a spectral width, in terms of wavelength, of no more than about 300 nm, or no more than about 200 nm, or no more than about 100 nm, or no more than about 50 nm, or no more than about 10 nm. The at least one region (e.g. the one single region or each of the two or more regions) of the visible portion of the electromagnetic spectrum may have a spectral width, in terms of wavelength, from about 1 nm to about 300 nm, for example, from about 10 nm to about 300 nm, or from about 50 nm to about 300 nm, or from about 100 nm to about 300 nm, or from about 200 nm to about 300 nm, or from about 10 nm to about 200 nm, or from about 10 nm to about 100 nm, or from about 10 nm to about 50 nm.

The at least one region (e.g., the one single region) of the visible portion may comprise (e.g., span or be) substantially the entire visible portion of the electromagnetic spectrum. That is to say, the infrared-reflective layer may be configured to reflect visible radiation (i.e., light) across substantially all of (e.g., across the entirety of) the visible portion of the electromagnetic spectrum.

The infrared-reflective layer may be configured to reflect red light. Red light is electromagnetic radiation having a wavelength $\lambda$ from about 620 nm to about 700 nm.

The infrared-reflective layer may be configured to reflect orange light. Orange light is electromagnetic radiation having a wavelength $\lambda$ from about 590 nm to about 620 nm.

The infrared-reflective layer may be configured to reflect yellow light. Yellow light is electromagnetic radiation having a wavelength $\lambda$ from about 570 nm to about 590 nm.

The infrared-reflective layer may be configured to reflect green light. Green light is electromagnetic radiation having a wavelength $\lambda$ from about 495 nm to about 570 nm.

The infrared-reflective layer may be configured to reflect blue light. Blue light is electromagnetic radiation having a wavelength $\lambda$ from about 450 nm to about 495 nm.

The infrared-reflective layer may be configured to reflect violet light. Violet light is electromagnetic radiation having a wavelength $\lambda$ from about 380 nm to about 450 nm.

The infrared-reflective layer may be configured to reflect: (a) red light and orange light; (b) red light, orange light and yellow light; (c) red light, orange light, yellow light and green light; (d) red light, orange light, yellow light, green light and blue light; or (e) red light, orange light, yellow light, green light, blue light and violet light.

The infrared-reflective layer may be configured to reflect electromagnetic radiation having a wavelength $\lambda$ no less than about 380 nm and no greater than about 1 mm, for example, no less than about 450 nm and no greater than about 1 mm, or no less than about 495 nm and no greater than about 1 mm, or no less than about 500 nm and no greater than about 1 mm, or no less than about 570 nm and no greater than about 1 mm, or no less than about 590 nm and no greater than about 1 mm, or no less than about 620 nm and no greater than about 1 mm, or no less than about 700 nm and no greater than about 1 mm.

In some examples, the infrared-reflective layer is configured to reflect electromagnetic radiation having a wavelength $\lambda$ no less than about 500 nm and no greater than about 1 mm.

In some examples, the infrared-reflective layer is configured to reflect electromagnetic radiation having a wavelength $\lambda$ no less than about 700 nm and no greater than about 1 mm.

The reflectivity of the infrared-reflective layer may be characterised by its reflectance R. Reflectance is a measure of the effectiveness of a surface in reflecting electromagnetic radiation. For incident electromagnetic radiation of a given spectral composition, polarization and/or geometrical distribution, reflectance is the ratio of reflected flux $\Phi_R$ to incident flux $\Phi_I$ under given conditions:

$$R = \frac{\Phi_R}{\Phi_I}$$

For a given material composition of the surface, reflectance tends to vary with the wavelength of the incident electromagnetic radiation. Accordingly, a spectral reflectance $R_\lambda$ can be defined as the ratio of reflected flux $\Phi_{R,\lambda}$ to incident flux $\Phi_{I,\lambda}$ at wavelength $\lambda$:

$$R_\lambda = \frac{\Phi_{R,\lambda}}{\Phi_{I,\lambda}}$$

Throughout this specification and the appended claims, references to reflectance R and spectral reflectance $R_\lambda$ are references to the reflectance and spectral reflectance as measured by spectrophotometry according to ISO 15368:2021.

The infrared-reflective layer may have a reflectance $R$ in the infrared portion of the electromagnetic spectrum (i.e., at least one wavelength $\lambda$ lying within the infrared portion of the electromagnetic spectrum) of no less than about 0.5, for example, no less than about 0.6, or no less than about 0.7, or no less than about 0.8, or no less than about 0.9. For example, the infrared-reflective layer may have a reflectance R in the at least one region (e.g. the one single region or each of the two or more regions) of the infrared portion of the electromagnetic spectrum, in which the infrared-reflective layer is configured to reflect, of no less than about 0.5, for example, no less than about 0.6, or no less than about 0.7, or no less than about 0.8, or no less than about 0.9. Additionally, the infrared-reflective layer may have a reflectance *R* in the at least one region (e.g. the one single region or each of the two or more regions) of the visible portion of the electromagnetic spectrum, in which the infrared-reflective layer is configured to reflect, of no less than about 0.5, for example, no less than about 0.6, or no less than about 0.7, or no less than about 0.8, or no less than about 0.9.

The infrared-reflective layer may have a reflectance *R* in the infrared portion of the electromagnetic spectrum, measured at room temperature, of no less than about 0.5, for example, no less than about 0.6, or no less than about 0.7, or no less than about 0.8, or no less than about 0.9. For example, the infrared-reflective layer may have a reflectance *R* in the at least one region (e.g., the one single region or each of the two or more regions) of the infrared portion of the electromagnetic spectrum, in which the infrared-reflective layer is configured to reflect, measured at room temperature, of no less than about 0.5, for example, no less than about 0.6, or no less than about 0.7, or no less than about 0.8, or no less than about 0.9. Additionally, the infrared-reflective layer may have a reflectance *R* in the at least one region (e.g., the one single region or each of the two or more regions) of the visible portion of the electromagnetic spectrum, in which the infrared-reflective layer is configured to reflect, measured at room temperature, of no less than about 0.5, for example, no less than about 0.6, or no less than about 0.7, or no less than about 0.8, or no less than about 0.9.

The infrared-reflective layer may have a reflectance *R* in the infrared portion of the electromagnetic spectrum, measured at a temperature no less than about 600 °C and no greater than about 1400 °C, of no less than about 0.5, for example, no less than about 0.6, or no less than about 0.7, or no less than about 0.8, or no less than about 0.9. For example, the infrared-reflective layer may have a reflectance *R* in the at least one region (e.g., the one single region or each of the two or more regions) of the infrared portion of the electromagnetic spectrum, in which the infrared-reflective layer is configured to reflect, measured at a temperature no less than about 600 °C and no greater than about 1400 °C, of no less than about 0.5, for example, no less than about 0.6, or no less than about 0.7, or no less than about 0.8, or no less than about 0.9. Additionally, the infrared-reflective layer may have a reflectance R in the at least one region (e.g., the one single region or each of the two or more regions) of the visible portion of the electromagnetic spectrum, in which the infrared-reflective layer is configured to reflect, measured at a temperature no less than about 600 °C and no greater than about 1400 °C, of no less than about 0.5, for example, no less than about 0.6, or no less than about 0.7, or no less than about 0.8, or no less than about 0.9.

The infrared-reflective layer may have a reflectance *R* in the infrared portion of the electromagnetic spectrum, measured at a temperature of about 1000 °C, of no less than about 0.5, for example, no less than about 0.6, or no less than about 0.7, or no less than about 0.8, or no less than about 0.9. For example, the infrared-reflective layer may have a reflectance *R* in the at least one region (e.g., the one single region or each of the two or more regions) of the infrared portion of the electromagnetic spectrum, in which the infrared-reflective layer is configured to reflect, measured at a temperature of about 1000 °C, of no less than about 0.5, for example, no less than about 0.6, or no less than about 0.7, or no less than about 0.8, or no less than about 0.9. Additionally, the infrared-reflective layer may have a reflectance *R* in the at least one region (e.g., the one single region or each of the two or more regions) of the visible portion of the electromagnetic spectrum, in which the infrared-reflective layer is configured to reflect, measured at a temperature of about 1000 °C, of no less than about 0.5, for example, no less than about 0.6, or no less than about 0.7, or no less than about 0.8, or no less than about 0.9.

The infrared-reflective layer may have a reflectance *R* in the infrared portion of the electromagnetic spectrum, measured at a temperature of about 1400 °C, of no less than about 0.5, for example, no less than about 0.6, or no less than about 0.7, or no less than about 0.8, or no less than about 0.9. For example, the infrared-reflective layer may have a reflectance *R* in the at least one region (e.g., the one single region or each of the two or more regions) of the infrared portion of the electromagnetic spectrum, in which the infrared-reflective layer is configured to reflect, measured at a temperature of about 1400 °C, of no less than about 0.5, for example, no less than about 0.6, or no less than about 0.7, or no less than about 0.8, or no less than about 0.9. Additionally, the infrared-reflective layer may have a reflectance *R* in the at least one region (e.g., the one single region or each of the two or more regions) of the visible portion of the electromagnetic spectrum, in which the infrared-reflective layer is configured to reflect, measured at a temperature of about 1400 °C, of no less than about 0.5, for example, no less than about 0.6, or no less than about 0.7, or no less than about 0.8, or no less than about 0.9.

The infrared-reflective layer may have a reflectance *R* of no less than about 0.5, for example, no less than about 0.6, or no less than about 0.7, or no less than about 0.8, or no less than about 0.9, measured using incident electromagnetic radiation having a wavelength *λ* no less than about 500 nm and no greater than about 1 mm. The infrared-reflective layer may have a reflectance *R* of no less than about 0.5, for example, no less than about 0.6, or no less than about 0.7, or no less than about 0.8, or no less than about 0.9, measured using incident electromagnetic radiation having a wavelength *λ* no less than about 700 nm and no greater than about 1 mm.

The infrared-reflective layer may have a reflectance *R* of no less than about 0.5, for example, no less than about 0.6, or no less than about 0.7, or no less than about 0.8, or no less than about 0.9, measured at room temperature using incident electromagnetic radiation having a wavelength *λ* no less than about 500 nm and no greater than about 1 mm. The infrared-reflective layer may have a reflectance $R$ of no less than about 0.5, for example, no less than about 0.6, or no less than about 0.7, or no less than about 0.8, or no less than about 0.9, measured at room temperature using incident electromagnetic radiation having a wavelength $\lambda$ no less than about 700 nm and no greater than about 1 mm.

The infrared-reflective layer may have a reflectance $R$ of no less than about 0.5, for example, no less than about 0.6, or no less than about 0.7, or no less than about 0.8, or no less than about 0.9, measured at a temperature no less than about 600 °C and no greater than about 1400 °C using incident electromagnetic radiation having a wavelength $\lambda$ no less than about 500 nm and no greater than about 1 mm. The infrared-reflective layer may have a reflectance $R$ of no less than about 0.5, for example, no less than about 0.6, or no less than about 0.7, or no less than about 0.8, or no less than about 0.9, measured at a temperature no less than about 600 °C and no greater than about 1400 °C using incident electromagnetic radiation having a wavelength $\lambda$ no less than about 700 nm and no greater than about 1 mm.

The infrared-reflective layer may have a reflectance $R$ of no less than about 0.5, for example, no less than about 0.6, or no less than about 0.7, or no less than about 0.8, or no less than about 0.9, measured at about 1000 °C using incident electromagnetic radiation having a wavelength $\lambda$ no less than about 500 nm and no greater than about 1 mm. The infrared-reflective layer may have a reflectance $R$ of no less than about 0.5, for example, no less than about 0.6, or no less than about 0.7, or no less than about 0.8, or no less than about 0.9, measured at about 1000 °C using incident electromagnetic radiation having a wavelength $\lambda$ no less than about 700 nm and no greater than about 1 mm.

The infrared-reflective layer may have a reflectance $R$ of no less than about 0.5, for example, no less than about 0.6, or no less than about 0.7, or no less than about 0.8, or no less than about 0.9, measured at about 1400 °C using incident electromagnetic radiation having a wavelength $\lambda$ no less than about 500 nm and no greater than about 1 mm. The infrared-reflective layer may have a reflectance $R$ of no less than about 0.5, for example, no less than about 0.6, or no less than about 0.7, or no less than about 0.8, or no less than about 0.9, measured at about 1400 °C using incident electromagnetic radiation having a wavelength $\lambda$ no less than about 700 nm and no greater than about 1 mm.

The infrared-reflective layer may have a spectral reflectance $R_\lambda$ in the infrared portion of the electromagnetic spectrum (i.e., at least one wavelength $\lambda$ lying within the infrared portion of the electromagnetic spectrum) of no less than about 0.5, for example, no less than about 0.6, or no less than about 0.7, or no less than about 0.8, or no less than about 0.9. For example, the infrared-reflective layer may have a spectral reflectance $R_\lambda$ in the at least one region (e.g., the one single region or each of the two or more regions) of the infrared portion of the electromagnetic spectrum, in which the infrared-reflective layer is configured to reflect, of no less than about 0.5, for example, no less than about 0.6, or no less than about 0.7, or no less than about 0.8, or no less than about 0.9. Additionally, the infrared-reflective layer may have a spectral reflectance $R_\lambda$ in the at least one region (e.g., the one single region or each of the two or more regions) of the visible portion of the electromagnetic spectrum, in which the infrared-reflective layer is configured to reflect, of no less than about 0.5, for example, no less than about 0.6, or no less than about 0.7, or no less than about 0.8, or no less than about 0.9.

The infrared-reflective layer may have a spectral reflectance $R_\lambda$ in the infrared portion of the electromagnetic spectrum, measured at room temperature, of no less than about 0.5, for example, no less than about 0.6, or no less than about 0.7, or no less than about 0.8, or no less than about 0.9. For example, the infrared-reflective layer may have a spectral reflectance $R_\lambda$ in the at least one region (e.g., the one single region or each of the two or more regions) of the infrared portion of the electromagnetic spectrum, in which the infrared-reflective layer is configured to reflect, measured at room temperature, of no less than about 0.5, for example, no less than about 0.6, or no less than about 0.7, or no less than about 0.8, or no less than about 0.9. Additionally, the infrared-reflective layer may have a spectral reflectance $R_\lambda$ in the at least one region (e.g., the one single region or each of the two or more regions) of the visible portion of the electromagnetic spectrum, in which the infrared-reflective layer is configured to reflect, measured at room temperature, of no less than about 0.5, for example, no less than about 0.6, or no less than about 0.7, or no less than about 0.8, or no less than about 0.9.

The infrared-reflective layer may have a spectral reflectance $R_\lambda$ in the infrared portion of the electromagnetic spectrum, measured at a temperature no less than about 600 °C and no greater than about 1400 °C, of no less than about 0.5, for example, no less than about 0.6, or no less than about 0.7, or no less than about 0.8, or no less than about 0.9. For example, the infrared-reflective layer may have a spectral reflectance $R_\lambda$ in the at least one region (e.g., the one single region or each of the two or more regions) of the infrared portion of the electromagnetic spectrum, in which the infrared-reflective layer is configured to reflect, measured at a temperature no less than about 600 °C and no greater than about 1400 °C, of no less than about 0.5, for example, no less than about 0.6, or no less than about 0.7, or no less than about 0.8, or no less than about 0.9. Additionally, the infrared-reflective layer may have a spectral reflectance $R_\lambda$ in the at least one region (e.g., the one single region or each of the two or more regions) of the visible portion of the electromagnetic spectrum, in which the infrared-reflective layer is configured to reflect, measured at a temperature no less than about 600 °C and no greater than about 1400 °C, of no less than about 0.5, for example, no less than about 0.6, or no less than about 0.7, or no less than about 0.8, or no less than about 0.9.

The infrared-reflective layer may have a spectral reflectance $R_\lambda$ in the infrared portion of the electromagnetic spectrum, measured at about 1000 °C, of no less than about 0.5, for example, no less than about 0.6, or no less than about 0.7, or no less than about 0.8, or no less than about 0.9. For example, the infrared-reflective layer may have a spectral reflectance $R_\lambda$ in the at least one region (e.g., the one single region or each of the two or more regions) of the infrared portion of the electromagnetic spectrum, in which the infrared-reflective layer is configured to reflect, measured at about 1000 °C, of no less than about 0.5, for example, no less than about 0.6, or no less than about 0.7, or no less than about 0.8, or no less than about 0.9. Additionally, the infrared-reflective layer may have a spectral reflectance $R_\lambda$ in the at least one region (e.g., the one single region or each of the two or more regions) of the visible portion of the electromagnetic spectrum, in which the infrared-reflective layer is configured to reflect, measured at about 1000 °C, of no less than about 0.5, for example, no less than about 0.6, or no less than about 0.7, or no less than about 0.8, or no less than about 0.9.

The infrared-reflective layer may have a spectral reflectance $R_\lambda$ in the infrared portion of the electromagnetic spectrum, measured at about 1400 °C, of no less than about 0.5, for example, no less than about 0.6, or no less than about 0.7, or no less than about 0.8, or no less than about 0.9. For example, the infrared-reflective layer may have a spectral reflectance $R_\lambda$ in the at least one region (e.g., the one single region or each of the two or more regions) of the infrared portion of the electromagnetic spectrum, in which the infrared-reflective layer is configured to reflect, measured at about 1400 °C, of no less than about 0.5, for example, no less than about 0.6, or no less than about 0.7, or no less than about 0.8, or no less than about 0.9. Additionally, the infrared-reflective layer may have a spectral reflectance $R_\lambda$ in the at least one region (e.g., the one single region or each of the two or more regions) of the visible portion of the electromagnetic spectrum, in which the infrared-reflective layer is configured to reflect, measured at about 1400 °C, of no less than about 0.5, for example, no less than about 0.6, or no less than about 0.7, or no less than about 0.8, or no less than about 0.9.

The infrared-reflective layer may have a spectral reflectance $R_\lambda$ of no less than about 0.5, for example, no less than about 0.6, or no less than about 0.7, or no less than about 0.8, or no less than about 0.9, measured using incident electromagnetic radiation having a wavelength $\lambda$ no less than about 500 nm and no greater than about 1 mm. The infrared-reflective layer may have a spectral reflectance $R_\lambda$ of no less than about 0.5, for example, no less than about 0.6, or no less than about 0.7, or no less than about 0.8, or no less than about 0.9, measured using incident electromagnetic radiation having a wavelength $\lambda$ no less than about 700 nm and no greater than about 1 mm.

The infrared-reflective layer may have a spectral reflectance $R_\lambda$ of no less than about 0.5, for example, no less than about 0.6, or no less than about 0.7, or no less than about 0.8, or no less than about 0.9, measured at room temperature using incident electromagnetic radiation having a wavelength $\lambda$ no less than about 500 nm and no greater than about 1 mm. The infrared-reflective layer may have a spectral reflectance $R_\lambda$ of no less than about 0.5, for example, no less than about 0.6, or no less than about 0.7, or no less than about 0.8, or no less than about 0.9, measured at room temperature using incident electromagnetic radiation having a wavelength $\lambda$ no less than about 700 nm and no greater than about 1 mm.

The infrared-reflective layer may have a spectral reflectance $R_\lambda$ of no less than about 0.5, for example, no less than about 0.6, or no less than about 0.7, or no less than about 0.8, or no less than about 0.9, measured at a temperature no less than about 600 °C and no greater than about 1400 °C using incident electromagnetic radiation having a wavelength $\lambda$ no less than about 500 nm and no greater than about 1 mm. The infrared-reflective layer may have a spectral reflectance $R_\lambda$ of no less than about 0.5, for example, no less than about 0.6, or no less than about 0.7, or no less than about 0.8, or no less than about 0.9, measured at a temperature no less than about 600 °C and no greater than about 1400 °C using incident electromagnetic radiation having a wavelength $\lambda$ no less than about 700 nm and no greater than about 1 mm.

The infrared-reflective layer may have a spectral reflectance $R_\lambda$ of no less than about 0.5, for example, no less than about 0.6, or no less than about 0.7, or no less than about 0.8, or no less than about 0.9, measured at about 1000 °C using incident electromagnetic radiation having a wavelength $\lambda$ no less than about 500 nm and no greater than about 1 mm. The infrared-reflective layer may have a spectral reflectance $R_\lambda$ of no less than about 0.5, for example, no less than about 0.6, or no less than about 0.7, or no less than about 0.8, or no less than about 0.9, measured at about 1000 °C using incident electromagnetic radiation having a wavelength $\lambda$ no less than about 700 nm and no greater than about 1 mm.

The infrared-reflective layer may have a spectral reflectance $R_\lambda$ of no less than about 0.5, for example, no less than about 0.6, or no less than about 0.7, or no less than about 0.8, or no less than about 0.9, measured at about 1400 °C using incident electromagnetic radiation having a wavelength $\lambda$ no less than about 500 nm and no greater than about 1 mm. The infrared-reflective layer may have a spectral reflectance $R_\lambda$ of no less than about 0.5, for example, no less than about 0.6, or no less than about 0.7, or no less than about 0.8, or no less than about 0.9, measured at about 1400 °C using incident electromagnetic radiation having a wavelength $\lambda$ no less than about 700 nm and no greater than about 1 mm.

The reflectance $R$ of a surface, particularly in the visible and infrared portions of the electromagnetic spectrum, can be related to the emissivity $\varepsilon$ of the said surface. Emissivity is a measure of the effectiveness of a surface in emitting energy as thermal radiation, i.e., as visible radiation (i.e., light) and as infrared radiation. Emissivity $\varepsilon$ is the ratio of radiant exitance $M_E$ of a surface under given conditions to radiant exitance $M_E^\circ$ of a black body at the same temperature as the surface:

$$\varepsilon = \frac{M_E}{M_E^\circ}$$

For a given material composition of the surface, emissivity tends to vary with the wavelength of the electromagnetic radiation being emitted. Accordingly, a spectral emissivity $\varepsilon_\lambda$ can be defined by the ratio of radiant exitance $M_{E,\lambda}$ of the surface to radiant exitance $M_{E,\lambda}^\circ$ of a black body at the same temperature as the surface at wavelength $\lambda$:

$$\varepsilon_\lambda = \frac{M_{E,\lambda}}{M_{E,\lambda}^\circ}$$

Spectrophotometric measurement of emissivity is well-known in the art and may be carried out, for example, in accordance with standard ASTM C835-06.

Due to conservation of energy and Kirchhoffs law of thermal radiation, emissivity and reflectance are related. In particular, a surface having a low emissivity will tend to have a high reflectance, and *vice versa.* The infrared-reflective layer may therefore have a relatively low emissivity.

The infrared-reflective layer may have an emissivity $\varepsilon$ of less than about 0.4, for example, no greater than about 0.3, or no greater than about 0.2, or no greater than about 0.1, or no greater than about 0.05. The infrared-reflective layer may have an emissivity $\varepsilon$ in the infrared portion of the electromagnetic spectrum of less than about 0.4, for example, no greater than about 0.3 or no greater than about 0.2, or no greater than about 0.1, or no greater than about 0.05. For example, the infrared-reflective layer may have an emissivity $\varepsilon$ in the at least one region (e.g., the one single region or each of the two or more regions) of the infrared portion of the electromagnetic spectrum, in which the infrared-reflective layer is configured to reflect, of less than about 0.4, for example, no greater than about 0.3, or no greater than about 0.2, or no greater than about 0.1, or no greater than about 0.05. Additionally, the infrared-reflective layer may have an emissivity $\varepsilon$ in the at least one region (e.g., the one single region or each of the two or more regions) of the visible portion of the electromagnetic spectrum, in which the infrared-reflective layer is configured to reflect, of less than about 0.4, for example, no greater than about 0.3, or no greater than about 0.2, or no greater than about 0.1, or no greater than about 0.05.

The infrared-reflective layer may have an emissivity $\varepsilon$, measured at room temperature, of less than about 0.4, for example, no greater than about 0.3, or no greater than about 0.2, or no greater than about 0.1, or no greater than about 0.05. The infrared-reflective layer may have an emissivity $\varepsilon$ in the infrared portion of the electromagnetic spectrum, measured at room temperature, of less than about 0.4, for example, no greater than about 0.3, or no greater than about 0.2, or no greater than about 0.1, or no greater than about 0.05. For example, the infrared-reflective layer may have an emissivity $\varepsilon$ in the at least one region (e.g., the one single region or each of the two or more regions) of the infrared portion of the electromagnetic spectrum, in which the infrared-reflective layer is configured to reflect, measured at room temperature, of less than about 0.4, for example, no greater than about 0.3, or no greater than about 0.2, or no greater than about 0.1, or no greater than about 0.05. Additionally, the infrared-reflective layer may have an emissivity $\varepsilon$ in the at least one region (e.g., the one single region or each of the two or more regions) of the visible portion of the electromagnetic spectrum, in which the infrared-reflective layer is configured to reflect, measured at room temperature, of less than about 0.4, for example, no greater than about 0.3, or no greater than about 0.2, or no greater than about 0.1, or no greater than about 0.05.

The infrared-reflective layer may have an emissivity $\varepsilon$, measured at a temperature no less than about 600 °C and no greater than about 1400 °C, of less than about 0.4, for example, no greater than about 0.3, or no greater than about 0.2, or no greaterthan about 0.1, or no greaterthan about 0.05. The infrared-reflective layer may have an emissivity $\varepsilon$ in the infrared portion of the electromagnetic spectrum, measured at a temperature no less than about 600 °C and no greater than about 1400 °C, of less than about 0.4, for example, no greater than about 0.3, or no greater than about 0.2, or no greaterthan about 0.1, or no greater than about 0.05. For example, the infrared-reflective layer may have an emissivity $\varepsilon$ in the at least one region (e.g., the one single region or each of the two or more regions) of the infrared portion of the electromagnetic spectrum, in which the infrared-reflective layer is configured to reflect, measured at a temperature no less than about 600 °C and no greater than about 1400 °C, of less than about 0.4, for example, no greater than about 0.3, or no greater than about 0.2, or no greaterthan about 0.1, or no greater than about 0.05. Additionally, the infrared-reflective layer may have an emissivity $\varepsilon$ in the at least one region (e.g., the one single region or each of the two or more regions) of the visible portion of the electromagnetic spectrum, in which the infrared-reflective layer is configured to reflect, measured at a temperature no less than about 600 °C and no greater than about 1400 °C, of less than about 0.4, for example, no greater than about 0.3, or no greater than about 0.2, or no greaterthan about 0.1, or no greater than about 0.05.

The infrared-reflective layer may have an emis-

sivity $\varepsilon$, measured at a temperature of about 1000 °C, of less than about 0.4, for example, no greater than about 0.3, or no greater than about 0.2, or no greater than about 0.1, or no greater than about 0.05. The infrared-reflective layer may have an emissivity $\varepsilon$ in the infrared portion of the electromagnetic spectrum, measured at a temperature of about 1000 °C, of less than about 0.4, for example, no greater than about 0.3, or no greater than about 0.2, or no greater than about 0.1, or no greater than about 0.05. For example, the infrared-reflective layer may have an emissivity $\varepsilon$ in the at least one region (e.g., the one single region or each of the two or more regions) of the infrared portion of the electromagnetic spectrum, in which the infrared-reflective layer is configured to reflect, measured at a temperature of about 1000 °C, of less than about 0.4, for example, no greater than about 0.3, or no greater than about 0.2, or no greater than about 0.1, or no greater than about 0.05. Additionally, the infrared-reflective layer may have an emissivity $\varepsilon$ in the at least one region (e.g., the one single region or each of the two or more regions) of the visible portion of the electromagnetic spectrum, in which the infrared-reflective layer is configured to reflect, measured at a temperature of about 1000 °C, of less than about 0.4, for example, or no greater than about 0.3, or no greater than about 0.2, or no greater than about 0.1, or no greater than about 0.05.

The infrared-reflective layer may have an emissivity $\varepsilon$, measured at a temperature of about 1400 °C, of less than about 0.4, for example, no greater than about 0.3, or no greater than about 0.2, or no greater than about 0.1, or no greater than about 0.05. The infrared-reflective layer may have an emissivity $\varepsilon$ in the infrared portion of the electromagnetic spectrum, measured at a temperature of about 1400 °C, of less than about 0.4, for example, no greater than about 0.3, or no greater than about 0.2, or no greater than about 0.1, or no greater than about 0.05. For example, the infrared-reflective layer may have an emissivity $\varepsilon$ in the at least one region (e.g., the one single region or each of the two or more regions) of the infrared portion of the electromagnetic spectrum, in which the infrared-reflective layer is configured to reflect, measured at a temperature of about 1400 °C, of less than about 0.4, for example, no greater than about 0.3, or no greater than about 0.2, or no greater than about 0.1, or no greater than about 0.05. Additionally, the infrared-reflective layer may have an emissivity $\varepsilon$ in the at least one region (e.g.,, the one single region or each of the two or more regions) of the visible portion of the electromagnetic spectrum, in which the infrared-reflective layer is configured to reflect, measured at a temperature of about 1400 °C, of less than about 0.4, for example, or no greater than about 0.3, or no greater than about 0.2, or no greater than about 0.1, or no greater than about 0.05.

The infrared-reflective layer may have an emissivity $\varepsilon$ of less than about 0.4, for example, no greater than about 0.3, or no greater than about 0.2, or no greater than about 0.1, or no greater than about 0.05, at a wavelength $\lambda$ no less than about 500 nm and no greater than about 1 mm. The infrared-reflective layer may have an emissivity $\varepsilon$ of less than about 0.4, for example, no greater than about 0.3, or no greater than about 0.2, or no greater than about 0.1, or no greater than about 0.05, at a wavelength $\lambda$ no less than about 700 nm and no greater than about 1 mm.

The infrared-reflective layer may have an emissivity $\varepsilon$, measured at room temperature, of less than about 0.4, for example, no greater than about 0.3, or no greater than about 0.2, or no greater than about 0.1, or no greater than about 0.05, at a wavelength $\lambda$ no less than about 500 nm and no greater than about 1 mm. The infrared-reflective layer may have an emissivity $\varepsilon$, measured at room temperature, of less than about 0.4, for example, no greater than about 0.3, or no greater than about 0.2, or no greater than about 0.1, or no greater than about 0.05, at a wavelength $\lambda$ no less than about 700 nm and no greater than about 1 mm.

The infrared-reflective layer may have an emissivity $\varepsilon$, measured at a temperature no less than about 600 °C and no greater than about 1400 °C, of less than about 0.4, for example, no greater than about 0.3, or no greater than about 0.2, or no greater than about 0.1, or no greater than about 0.05, at a wavelength $\lambda$ no less than about 500 nm and no greater than about 1 mm. The infrared-reflective layer may have an emissivity $\varepsilon$, measured at a temperature no less than about 600 °C and no greater than about 1400 °C, of less than about 0.4, for example, no greater than about 0.3, or no greater than about 0.2, or no greater than about 0.1, or no greater than about 0.05, at a wavelength $\lambda$ no less than about 700 nm and no greater than about 1 mm.

The infrared-reflective layer may have an emissivity $\varepsilon$, measured at a temperature of about 1000 °C, of less than about 0.4, for example, no greater than about 0.3, or no greater than about 0.2, or no greater than about 0.1, or no greater than about 0.05, at a wavelength $\lambda$ no less than about 500 nm and no greater than about 1 mm. The infrared-reflective layer may have an emissivity $\varepsilon$, measured at a temperature of about 1000 °C, of less than about 0.4, for example, no greater than about 0.3, or no greater than about 0.2, or no greater than about 0.1, or no greater than about 0.05, at a wavelength $\lambda$ no less than about 700 nm and no greater than about 1 mm.

The infrared-reflective layer may have an emissivity $\varepsilon$, measured at a temperature of about 1400 °C, of less than about 0.4, for example, no greater than about 0.3, or no greater than about 0.2, or no greater than about 0.1, or no greater than about 0.05, at a wavelength $\lambda$ no less than about 500 nm and no greater than about 1 mm. The infrared-reflective layer may have an emissivity $\varepsilon$, measured at a temperature of about 1400 °C, of less than about 0.4, for example, no greater than about 0.3, or no greater than about 0.2, or no greater than about 0.1, or no greater than about 0.05, at a wavelength $\lambda$ no less than about 700 nm and no greater than about 1 mm.

The infrared-reflective layer may have a spectral emissivity $\varepsilon_\lambda$ in the infrared portion of the electromagnetic spectrum (i.e. at least one wavelength $\lambda$ in the infrared portion of the electromagnetic spectrum) of less than about 0.4, for example, no greater than about 0.3, or no greater than about 0.2, or no greater than about 0.1, or no greater than about 0.05. For example, the infrared-reflective layer may have a spectral emissivity $\varepsilon_\lambda$ in the at least one region (e.g., the one single region or each of the two or more regions) of the infrared portion of the electromagnetic spectrum, in which the infrared-reflective layer is configured to reflect, of less than about 0.4, for example, no greater than about 0.3, or no greater than about 0.2, or no greater than about 0.1, or no greater than about 0.05. Additionally, the infrared-reflective layer may have a spectral emissivity $\varepsilon_\lambda$ in the at least one region (e.g., the one single region or each of the two or more regions) of the visible portion of the electromagnetic spectrum, in which the infrared-reflective layer is configured to reflect, of less than about 0.4, for example, no greater than about 0.3, or no greater than about 0.2, or no greater than about 0.1, or no greater than about 0.05.

The infrared-reflective layer may have a spectral emissivity $\varepsilon_\lambda$ in the infrared portion of the electromagnetic spectrum, measured at room temperature, of less than about 0.4, for example, no greater than about 0.3, or no greater than about 0.2, or no greater than about 0.1, or no greater than about 0.05. For example, the infrared-reflective layer may have a spectral emissivity $\varepsilon_\lambda$ in the at least one region (e.g., the one single region or each of the two or more regions) of the infrared portion of the electromagnetic spectrum, in which the infrared-reflective layer is configured to reflect, measured at room temperature, of less than about 0.4, for example, no greater than about 0.3, or no greater than about 0.2, or no greater than about 0.1, or no greater than about 0.05. Additionally, the infrared-reflective layer may have a spectral emissivity $\varepsilon_\lambda$ in the at least one region (e.g., the one single region or each of the two or more regions) of the visible portion of the electromagnetic spectrum, in which the infrared-reflective layer is configured to reflect, measured at room temperature, of less than about 0.4, for example, no greater than about 0.3, or no greater than about 0.2, or no greater than about 0.1, or no greater than about 0.05.

The infrared-reflective layer may have a spectral emissivity $\varepsilon_\lambda$ in the infrared portion of the electromagnetic spectrum, measured at a temperature no less than about 600 °C and no greater than about 1400 °C, of less than about 0.4, for example, no greater than about 0.3, or no greater than about 0.2, or no greater than about 0.1, or no greater than about 0.05. For example, the infrared-reflective layer may have a spectral emissivity $\varepsilon_\lambda$ in the at least one region (e.g., the one single region or each of the two or more regions) of the infrared portion of the electromagnetic spectrum, in which the infrared-reflective layer is configured to reflect, measured at a temperature no less than about 600 °C and no greater than about 1400 °C, of less than about 0.4, for example, no greater than about 0.3, or no greater than about 0.2, or no greater than about 0.1, or no greater than about 0.05. Additionally, the infrared-reflective layer may have a spectral emissivity $\varepsilon_\lambda$ in the at least one region (e.g., the one single region or each of the two or more regions) of the visible portion of the electromagnetic spectrum, in which the infrared-reflective layer is configured to reflect, measured at a temperature no less than about 600 °C and no greater than about 1400 °C, of less than about 0.4, for example, no greater than about 0.3, or no greater than about 0.2, or no greater than about 0.1, or no greater than about 0.05.

The infrared-reflective layer may have a spectral emissivity $\varepsilon_\lambda$ in the infrared portion of the electromagnetic spectrum, measured at a temperature of about 1000 °C, of less than about 0.4, for example, no greater than about 0.3, or no greater than about 0.2, or no greater than about 0.1, or no greater than about 0.05. For example, the infrared-reflective layer may have a spectral emissivity $\varepsilon_\lambda$ in the at least one region (e.g., the one single region or each of the two or more regions) of the infrared portion of the electromagnetic spectrum, in which the infrared-reflective layer is configured to reflect, measured at a temperature of about 1000 °C, of less than about 0.4, for example, no greater than about 0.3, or no greater than about 0.2, or no greater than about 0.1, or no greater than about 0.05. Additionally, the infrared-reflective layer may have a spectral emissivity $\varepsilon_\lambda$ in the at least one region (e.g., the one single region or each of the two or more regions) of the visible portion of the electromagnetic spectrum, in which the infrared-reflective layer is configured to reflect, measured at a temperature of about 1000 °C, of less than about 0.4, for example, no greater than about 0.3, or no greater than about 0.2, or no greater than about 0.1, or no greater than about 0.05.

The infrared-reflective layer may have a spectral emissivity $\varepsilon_\lambda$ in the infrared portion of the electromagnetic spectrum, measured at a temperature of about 1400 °C, of less than about 0.4, for example, no greater than about 0.3, or no greater than about 0.2, or no greater than about 0.1, or no greater than about 0.05. For example, the infrared-reflective layer may have a spectral emissivity $\varepsilon_\lambda$ in the at least one region (e.g., the one single region or each of the two or more regions) of the infrared portion of the electromagnetic spectrum, in which the infrared-reflective layer is configured to reflect, measured at a temperature of about 1400 °C, of less than about 0.4, for example, no greater than about 0.3, or no greater than about 0.2, or no greater than about 0.1, or no greater than about 0.05. Additionally, the infrared-reflective layer may have a spectral emissivity $\varepsilon_\lambda$ in the at least one region (e.g., the one single region or each of the two or more regions) of the visible portion of the electromagnetic spectrum, in which the infrared-reflective layer is configured to reflect, measured at a temperature of about 1400 °C, of less than about 0.4, for example, no greater than about 0.3, or no greater than about 0.2, or no greater than about 0.1, or no greater than about 0.05.

The infrared-reflective layer may have a spec-

tral emissivity $\varepsilon_\lambda$ of less than about 0.4, for example, no greater than about 0.3, or no greater than about 0.2, or no greater than about 0.1, or no greater than about 0.05, at a wavelength $\lambda$ no less than about 500 nm and no greater than about 1 mm. The infrared-reflective layer may have a spectral emissivity $\varepsilon_\lambda$ of less than about 0.4, for example, no greater than about 0.3, or no greater than about 0.2, or no greater than about 0.1, or no greater than about 0.05, at a wavelength $\lambda$ no less than about 700 nm and no greater than about 1 mm.

The infrared-reflective layer may have a spectral emissivity $\varepsilon_\lambda$, measured at room temperature, of less than about 0.4, for example, no greater than about 0.3, or no greater than about 0.2, or no greater than about 0.1, or no greater than about 0.05, at a wavelength $\lambda$ no less than about 500 nm and no greater than about 1 mm. The infrared-reflective layer may have a spectral emissivity $\varepsilon_\lambda$, measured at room temperature, of less than about 0.4, for example, no greater than about 0.3, or no greater than about 0.2, or no greater than about 0.1, or no greater than about 0.05, at a wavelength $\lambda$ no less than about 700 nm and no greater than about 1 mm.

The infrared-reflective layer may have a spectral emissivity $\varepsilon_\lambda$, measured at a temperature no less than about 600 °C and no greater than about 1400 °C, of less than about 0.4, for example, no greater than about 0.3, or no greater than about 0.2, or no greater than about 0.1, or no greater than about 0.05, at a wavelength $\lambda$ no less than about 500 nm and no greater than about 1 mm. The infrared-reflective layer may have a spectral emissivity $\varepsilon_\lambda$, measured at a temperature no less than about 600 °C and no greater than about 1400 °C, of less than about 0.4, for example, no greater than about 0.3, or no greater than about 0.2, or no greater than about 0.1, or no greater than about 0.05, at a wavelength $\lambda$ no less than about 700 nm and no greater than about 1 mm.

The infrared-reflective layer may have a spectral emissivity $\varepsilon_\lambda$, measured at a temperature of about 1000 °C, of less than about 0.4, for example, no greater than about 0.3, or no greater than about 0.2, or no greater than about 0.1, or no greater than about 0.05, at a wavelength $\lambda$ no less than about 500 nm and no greater than about 1 mm. The infrared-reflective layer may have a spectral emissivity $\varepsilon_\lambda$, measured at a temperature of about 1000 °C, of less than about 0.4, for example, no greater than about 0.3, or no greater than about 0.2, or no greater than about 0.1, or no greater than about 0.05, at a wavelength $\lambda$ no less than about 700 nm and no greater than about 1 mm.

The infrared-reflective layer may have a spectral emissivity $\varepsilon_\lambda$, measured at a temperature of about 1400 °C, of less than about 0.4, for example, no greater than about 0.3, or no greater than about 0.2, or no greater than about 0.1, or no greater than about 0.05, at a wavelength $\lambda$ no less than about 500 nm and no greater than about 1 mm. The infrared-reflective layer may have a spectral emissivity $\varepsilon_\lambda$, measured at a temperature of about 1400 °C, of less than about 0.4, for example, no greater than about 0.3, or no greater than about 0.2, or no greater than about 0.1, or no greater than about 0.05, at a wavelength $\lambda$ no less than about 700 nm and no greater than about 1 mm.

The infrared-reflective layer may comprise at least one infrared-reflective material. For example, the infrared-reflective layer may comprise one single infrared-reflective material. Alternatively, the infrared-reflective layer may comprise two or more different infrared-reflective materials. The at least one infrared-reflective material (e.g., the one single infrared-reflective material or the two or more different infrared-reflective materials) may be selected to achieve any reflectance, spectral reflectance, emissivity or spectral emissivity for the infrared-reflective layer defined herein.

The infrared-reflective layer may predominantly comprise infrared-reflective material (e.g., the at least one infrared-reflective material, for example, the one single infrared-reflective material or the two or more different infrared-reflective materials). For example, the infrared-reflective layer may comprise no less than about 50 wt. %, for example, or no less than about 60 wt. %, or no less than about 70 wt. %, or no less than about 80 wt. %, or no less than about 90 wt. %, or no less than about 95 wt. %, or no less than about 99 wt. %, infrared-reflective material (e.g., the at least one infrared-reflective material, for example, the one single infrared-reflective material or the two or more different infrared-reflective materials). The infrared-reflective layer may consist essentially of infrared-reflective material (e.g., the at least one infrared-reflective material, for example, the one single infrared-reflective material or the two or more different infrared-reflective materials). The infrared-reflective layer may consist of infrared-reflective material (e.g., the at least one infrared-reflective material, for example, the one single infrared-reflective material or the two or more different infrared-reflective materials). The infrared-reflective layer may be formed of infrared-reflective material (e.g., the at least one infrared-reflective material, for example, the one single infrared-reflective material or the two or more different infrared-reflective materials). The infrared-reflective layer may be a layer of infrared-reflective material (e.g., the at least one infrared-reflective material, for example, the one single infrared-reflective material or the two or more different infrared-reflective materials).

The infrared-reflective layer may comprise (e.g., consist of) two or more sub-layers. Each of the two or more sub-layers may have different compositions and/or microstructures. For example, each of the two or more sub-layers may comprise (e.g., consist essentially of, consist of or be formed from) different infrared-reflective materials. For example, the infrared-reflective layer may comprise (e.g., consist of) a sub-layer of gold and a sub-layer of platinum. Alternatively, the infrared-reflective layer may be a single layer of infrared-reflective material having a substantially uniform composition and/or microstructure throughout.

The at least one infrared-reflective material (e.g., the one single infrared-reflective material or the two or more different infrared-reflective materials) may comprise (e.g., predominantly comprise, consist essentially of, consist of, or be) one or more (i.e. infrared-reflective) metal elements. For example, the at least one infrared-reflective material (e.g., the one single infrared-reflective material or the two or more different infrared-reflective materials) may comprise (e.g., predominantly comprise, consist essentially of, consist of, or be) one or more (i.e., infrared-reflective) alkaline earth metal elements, (i.e., infrared-reflective) transition metal elements and/or (i.e. infrared-reflective) post-transition metal elements. For example, the at least one infrared-reflective material (e.g., the one single infrared-reflective material or the two or more different infrared-reflective materials) may comprise (e.g., predominantly comprise, consist essentially of, consist of, or be) one or more of gold, platinum, silver, ruthenium, rhodium, palladium, osmium, iridium, beryllium, magnesium, aluminium, chromium, nickel, copper, zinc, palladium, silver, tin, tungsten, platinum, gold, lead, and/or any combination thereof.

The at least one infrared-reflective material (e.g., the one single infrared-reflective material or the two or more different infrared-reflective materials) may have a melting point no less than about 600 °C, for example, no less than about 700 °C, or no less than about 800 °C, or no less than about 900 °C, or no less than about 1000 °C, or no less than about 1100 °C, or no less than about 1200 °C, or no less than about 1300 °C, or no less than about 1400 °C. The at least one infrared-reflective material (e.g., the one single infrared-reflective material or the two or more different infrared-reflective materials) may comprise (e.g., predominantly comprise, consist essentially of, consist of, or be) one or more (i.e. infrared-reflective) metal elements having a melting point no less than about 600 °C, for example, no less than about 700 °C, or no less than about 800 °C, or no less than about 900 °C, or no less than about 1000 °C, or no less than about 1100 °C, or no less than about 1200 °C, or no less than about 1300 °C, or no less than about 1400 °C.

The at least one infrared-reflective material (e.g., the one single infrared-reflective material or the two or more different infrared-reflective materials) preferably does not oxidise at temperatures less than about 600 °C, for example, less than about 700 °C, or less than about 800 °C, or less than about 900 °C, or less than about 1000 °C, or less than about 1100 °C, or less than about 1200 °C, or no less than about 1300 °C, or no less than about 1400 °C. The at least one infrared-reflective material (e.g., the one single infrared-reflective material or the two or more different infrared-reflective materials) may therefore comprise (e.g., predominantly comprise, consist essentially of, consist of, or be) one or more (i.e. infrared-reflective) metal elements which does not oxidise at temperatures less than about 600 °C, for example, less than about 700 °C, or less than about 800 °C, or less than about 900 °C, or less than about 1000 °C, or less than about 1100 °C, or less than about 1200 °C, or no less than about 1300 °C, or no less than about 1400 °C.

Accordingly, the at least one infrared-reflective material (e.g., the one single infrared-reflective material or the two or more different infrared-reflective materials) may comprise (e.g., predominantly comprise, consist essentially of, consist of, or be) one or more (i.e., infrared-reflective) noble metal elements. For example, the at least one infrared-reflective material (e.g., the one single infrared-reflective material or the two or more different infrared-reflective materials) may comprise (e.g., predominantly comprise, consist essentially of, consist of, or be) one or more of gold, platinum, silver, ruthenium, rhodium, palladium, osmium, iridium, and/or any combination thereof. In particular, the at least one infrared-reflective material (e.g., the one single infrared-reflective material or the two or more different infrared-reflective materials) may comprise (e.g., predominantly comprise, consist essentially of, consist of, or be) one or more of gold and/or platinum.

Gold has a particularly low emissivity. Gold therefore exhibits a particularly high reflectance for wavelengths in the infrared portion of the electromagnetic spectrum. However, the melting temperature of pure gold is about 1064 °C. An infrared-reflective layer formed from pure gold may therefore be unsuitable for use in environments reaching or exceeding 1064 °C. However, platinum has a higher melting temperature of about 1768 °C. Platinum also exhibits a low emissivity, although not as low as that of gold. A good balance between emissivity (and hence infrared reflectance) and melting temperature can be achieved by forming the infrared-reflective layer from a gold and platinum alloy.

Accordingly, the at least one infrared-reflective material (e.g., the one single infrared-reflective material or the two or more different infrared-reflective materials) may comprise (e.g., predominantly comprise, consist essentially of, consist of, or be) a gold and platinum alloy.

The gold and platinum alloy may comprise no less than about 50 wt. %, for example, no less than about 60 wt. %, or no less than about 70 wt. %, or no less than about 80 wt. %, or no less than about 90 wt. %, or no less than about 95 wt. %, gold. The gold and platinum alloy may comprise no more than about 99 wt. %, for example, no more than about 98 wt. %, or no more than about 97 wt. %, or no more than about 96 wt. %, or no more than about 95 wt. %, or no more than about 90 wt. %, or no more than about 85 wt. %, or no more than about 80 wt. %, or no more than about 75 wt. %, or no more than about 70 wt. %, or no more than about 65 wt. %, or no more than about 60 wt. %, or no more than about 55 wt. %, or no more than about 50 wt. %, gold. The gold and platinum alloy may comprise from about 50 wt. % to about 99 wt. %, for example, from about 55 wt. % to about 99 wt. %, or from about 60 wt. % to about 99 wt. %, or from about 65 wt. % to about 99 wt. %, or from about 70 wt. % to about 99 wt. %, or from about 75 wt. % to about 99 wt. %, or from about 80 wt. % to about 99 wt. %, or from about 85 wt. % to about 99 wt. %, or from about 90 wt. % to about 99 wt. %, or from about 95 wt. % to about 99 wt. %, or from about 90 wt. % to about 98 wt. %, or from about 90 wt. % to about 97 wt. %, or from about 90 wt. % to about 96 wt. %, or from about 90 wt. % to about 95 wt. %, gold.

The gold and platinum alloy may comprise no less than about 1 wt. %, for example, no less than about 2 wt. %, or no less than about 3 wt. %, or no less than about 4 wt. %, or no less than about 5 wt. %, or no less than about 10 wt. %, or no less than about 15 wt. %, or no less than about 20 wt. %, or no less than about 25 wt. %, or no less than about 30 wt. %, or no less than about 45 wt. %, platinum. The gold and platinum alloy may comprise no more than about 50 wt. %, for example, no more than about 45 wt. %, or no more than about 40 wt. %, or no more than about 35 wt. %, or no more than about 30 wt. %, or no more than about 25 wt. %, or no more than about 20 wt. %, or no more than about 15 wt. %, or no more than about 10 wt. %, or no more than about 5 wt. %, or no more than about 4 wt. %, or no more than about 3 wt. %, or no more than about 2 wt. %, platinum. The gold and platinum alloy may comprise from about 1 wt. % to about 50 wt. %, for example, from about 1 wt. % to about 45 wt. %, or from about 1 wt. % to about 40 wt. %, or from about 1 wt. % to about 35 wt. %, or from about 1 wt. % to about 30 wt. %, or from about 1 wt. % to about 25 wt. %, or from about 1 wt. % to about 20 wt. %, or from about 1 wt. % to about 15 wt. %, or from about 1 wt. % to about 10 wt. %, or from about 1 wt. % or to about 5 wt. %, or from about 1 wt. % to about 4 wt. %, or from about 1 wt. % to about 3 wt. %, or from about 1 wt. % to about 2 wt. %, or from about 2 wt. % to about 10 wt. %, or from about 3 wt. % to about 10 wt. %, or from about 4 wt. % to about 10 wt. %, or from about 5 wt. % to about 10 wt. %, platinum.

The platinum and gold alloy may comprise (e.g., consist essentially of, or consist of): from about 50 wt. % to about 99 wt. %, for example, from about 55 wt. % to about 99 wt. %, or from about 60 wt. % to about 99 wt. %, or from about 65 wt. % to about 99 wt. %, or from about 70 wt. % to about 99 wt. %, or from about 75 wt. % to about 99 wt. %, or from about 80 wt. % to about 99 wt. %, or from about 85 wt. % to about 99 wt. %, or from about 90 wt. % to about 99 wt. %, or from about 95 wt. % to about 99 wt. %, gold; from about 1 wt. % to about 50 wt. %, for example, from about 1 wt. % to about 45 wt. %, or from about 1 wt. % to about 40 wt. %, or from about 1 wt. % to about 35 wt. %, or from about 1 wt. % to about 30 wt. %, or from about 1 wt. % to about 25 wt. %, or from about 1 wt. % to about 20 wt. %, or from about 1 wt. % to about 15 wt. %, or from about 1 wt. % to about 10 wt. %, or from about 1 wt. % or to about 5 wt. %, or from about 1 wt. % to about 4 wt. %, or from about 1 wt. % to about 3 wt. %, or from about 1 wt. % to about 2 wt. %, platinum; and optionally the usual impurities.

In some examples, the gold and platinum alloy comprises no more than about 15 wt. %, for example, no more than about 14 wt. %, or no more than about 13 wt. %, or no more than about 12 wt. %, or no more than about 11 wt. %, or no more than about 10 wt. %, platinum. The gold and platinum binary phase diagram exhibits a miscibility gap at low temperatures. Avoidance of platinum contents above about 15 wt. %, or lower, may reduce the tendency of the gold and platinum alloy to phase-separate at low temperatures.

The at least one infrared-reflective material (e.g., the one single infrared-reflective material or the two or more different infrared-reflective materials) may comprise (e.g., predominantly comprise, consist essentially of, consist of, or be) the one or more metal elements (e.g., one or more noble metal elements) in elemental form and/or in the form of a metal alloy.

Where the one or more metal elements (e.g., one or more noble metal elements) are provided in the form of a metal alloy, the metal alloy may predominantly comprise infrared-reflective metal elements. For example, the metal alloy may comprise no less than about 50 wt. %, for example, no less than about 60 wt. %, or no less than about 70 wt. %, or no less than about 80 wt. %, or no less than about 90 wt. %, or no less than about 95 wt. %, or no less than about 99 wt. %, infrared-reflective metal elements. The metal alloy may consist essentially, or consist, of infrared-reflective metal elements.

Where the one or more metal elements (e.g., one or more noble metal elements) are provided in the form of a metal alloy, the metal alloy may predominantly comprise infrared-reflective noble metal elements. For example, the metal alloy may comprise no less than about 50 wt. %, for example, no less than about 60 wt. %, or no less than about 70 wt. %, or no less than about 80 wt. %, or no less than about 90 wt. %, or no less than about 95 wt. %, or no less than about 99 wt. %, infrared-reflective noble metal elements. The metal alloy may consist essentially, or consist, of infrared-reflective noble metal elements.

Where the one or more metal elements (e.g., one or more noble metal elements) are provided in the form of a metal alloy, the metal alloy may predominantly comprise gold, platinum, silver, ruthenium, rhodium, palladium, osmium, iridium, and/or any combination thereof. For example, the metal alloy may comprise no less than about 50 wt. %, for example, no less than about 60 wt. %, or no less than about 70 wt. %, or no less than about 80 wt. %, or no less than about 90 wt. %, or no less than about 95 wt. %, or no less than about 99 wt. %, gold, platinum, silver, ruthenium, rhodium, palladium, osmium, iridium, and/or any combination thereof. The metal alloy may consist essentially, or consist, of gold, platinum, silver, ruthenium, rhodium, palladium, osmium, iridium, and/or any combination thereof.

Where the one or more metal elements (e.g., one or more noble metal elements) are provided in the form of a metal alloy, the metal alloy may predominantly comprise gold and/or platinum. For example, the metal alloy may comprise no less than about 50 wt. %, for example, no less than about 60 wt. %, or no less than about 70 wt. %, or no less than about 80 wt. %, or no less than about 90 wt. %, or no less than about 95 wt. %, or no less than about 99 wt. %, gold and/or platinum. The metal alloy may consist essentially, or consist, of gold and platinum.

It may be that the infrared-reflective layer has a surface having an arithmetic average roughness $R_a$ or $S_a$ of no greater than about 5 $\mu$m, for example, no greater than about 4 $\mu$m, or no greater than about 3 $\mu$m, or no greater than about 2 $\mu$m, or no greater than about 1 $\mu$m, or no greater than about 0.75 $\mu$m, or no greater than about 0.5 $\mu$m, or no greater than about 0.1 $\mu$m. It may be that the infrared-reflective layer has a surface having an arithmetic average roughness $R_a$ or $S_a$ of no less than about 0.01 $\mu$m, for example, no less than about 0.05 $\mu$m, or no less than about 0.1 $\mu$m. It may be that the infrared-reflective layer has a surface having an arithmetic average roughness $R_a$ or $S_a$ from about 0.01 $\mu$m to about 5 $\mu$m, for example, from about 0.01 $\mu$m to about 4 $\mu$m, or from about 0.01 $\mu$m to about 3 $\mu$m, or from about 0.01 $\mu$m to about 2 $\mu$m, or from about 0.01 $\mu$m to about 1 $\mu$m, or from about 0.01 $\mu$m to about 0.75 $\mu$m, or from about 0.01 $\mu$m to about 0.5 $\mu$m, or from about 0.01 $\mu$m to about 0.1 $\mu$m.

The arithmetic average surface roughness $R_a$ is the arithmetic average surface roughness measured along a profile. $R_a$ may be measured using a profilometer, for example, according to ASME B46.1 or ISO 25178-Part 607.

The arithmetic average surface roughness $S_a$ is the arithmetic average surface roughness measured across an area. $S_a$ may be measured using a coordinate measuring machine (for example, an optical coordinate measuring machine such as provided in the alicona™ line available from Alicona Imaging GmbH, Germany), for example, according to ISO 25178-Part 607.

It will be appreciated that the surface of the infrared-reflective layer is not covered by another layer of (i.e., solid) material and is instead exposed to an atmosphere during use of the component. Accordingly, the surface may be considered to be an external surface of the infrared-reflective layer (and of the component), because the surface is exposed to an external (i.e., surrounding) atmosphere. However, it will be appreciated that the external (i.e., surrounding) atmosphere may itself be the internal atmosphere of an engine component. For example, the external atmosphere may be the internal atmosphere of a combustor.

It may be that the infrared-reflective layer is substantially non-porous.

For example, it may be that the infrared-reflective layer has a material porosity no greater than about 10 %, for example, no greater than about 5 %, or no greater than about 1 %. For example, the infrared-reflective layer may comprise (e.g., be made of, consist essentially of, or consist of) one or more substantially non-porous materials. The one or more substantially non-porous materials may (i.e., each) have a material porosity no greater than about 10 %, for example, no greater than about 5 %, or no greater than about 1 %.

The porosity of a material may be determined according to ISO 15901-1 :2005(en) or ASTM E2109-01.

A substantially non-porous infrared-reflective layer may have a reduced tendency to trap deposits (e.g., carbonaceous deposits, silica deposits, and the like) during use in a gas turbine engine.

The infrared-reflective layer may have a thickness of no greater than about 50 $\mu$m, for example, no greater than about 40 $\mu$m, or no greater than about 30 $\mu$m, or no greater than about 25 $\mu$m, or no greater than about 20 $\mu$m, or no greater than about 15 $\mu$m, or no greater than about 10 $\mu$m, or no greater than about 5 $\mu$m, or no greater than about 1 $\mu$m. The infrared-reflective layer may have a thickness of no less than about 500 nm, for example, no less than about 750 nm, or no less than about 1 $\mu$m, or no less than about 5 $\mu$m, or no less than about 10 $\mu$m. The infrared-reflective layer may have a thickness from about 500 nm to about 50 $\mu$m, for example, from about 750 nm to about 50 $\mu$m, or from about 500 nm to about 40 $\mu$m, or from about 500 nm to about 30 $\mu$m, or from about 500 nm to about 20 $\mu$m, or from about 500 nm to about 15 $\mu$m, or from about 500 nm to about 10 $\mu$m, or from about 750 nm to about 40 $\mu$m, or from about 750 nm to about 30 $\mu$m, or from about 750 nm to about 20 $\mu$m, or from about 750 nm to about 15 $\mu$m, or from about 750 nm to about 10 $\mu$m, or from about 1 $\mu$m to about 50 $\mu$m, or from about 1 $\mu$m to about 40 $\mu$m, or from about 1 $\mu$m to about 30 $\mu$m, or from about 1 $\mu$m to about 25 $\mu$m, or from about 1 $\mu$m to about 20 $\mu$m, or from about 1 $\mu$m to about 15 $\mu$m, or from about 1 $\mu$m to about 10 $\mu$m, or from about 5 $\mu$m to about 50 $\mu$m, or from about 10 $\mu$m to about 50 $\mu$m, or from about 500 nm to about 5 $\mu$m, or from about 500 nm to about 1 $\mu$m, or from about 750 nm to about 5 $\mu$m, or from about 750 nm to about 1 $\mu$m.

It may be that the infrared-reflective layer is one of two or more infrared-reflective layers configured to reflect infrared radiation away from the substrate. That is to say, it may be that the component comprises two or more infrared-reflective layers configured to reflect infrared radiation away from the substrate. For example, the component may comprise at least two, at least three, at least four, or at least five, infrared-reflective layers configured to reflect infrared radiation away from the substrate.

Each of the infrared-reflective layers may have any of the properties of infrared-reflective layers described herein. For example, it may be that each of the infrared-reflective layers have substantially the same properties (for example, they may have substantially the same reflectances and/or emissivities, they may be formed from the same materials, they may have the same thicknesses, etc.). Alternatively, it may be that one or more of the infrared-reflective layers have different properties (for example, they may have different reflectances and/or emissivities, they may be formed from different materials, they may have different thicknesses, etc). It will be appreciated that (e.g., the properties of) the infrared-reflective layers may be tuned for a particular application, for example, to achieve a particular overall reflectance and/or emissivity.

The two or more infrared-reflective layers may be stacked on top of one another. The two or more infrared-reflective layers may be stacked directly on top of one another, i.e. such that each of the two or more infrared-reflective layers is in direct contact with at least one other infrared-reflective layer. That is to say, the two or more infrared-reflective layers may form an infrared-reflective stack. The thicknesses and/or material compositions of the two or more infrared-reflective layers may be selected (i.e., the stack may be tuned) to enhance the reflectance and/or emissivity of the stack, for example, for particular wavelengths of electromagnetic radiation.

The component may further comprise a diffusion barrier layer between the substrate and the infrared-reflective layer(s). The diffusion barrier layer may be configured to inhibit (e.g., prevent) diffusion of species from the substrate to the infrared-reflective layer(s). For example, the diffusion barrier layer may be configured to inhibit (e.g., prevent) diffusion of one or more elements, such as one or more metal elements, from the substrate to the infrared-reflective layer(s). The one or more (e.g., metal) elements may be (e.g., metal) elements which are readily oxidised, e.g., at elevated temperatures (e.g., temperatures at which the component is typically used). For example, the diffusion barrier layer may be configured to inhibit (e.g., prevent) diffusion of nickel from the substrate to the infrared-reflective layer(s). For example, it may be that the substrate comprises (e.g., is formed from) a nickel-based alloy and the diffusion barrier layer is configured to inhibit (e.g., prevent) diffusion of nickel from the substrate to the infrared-reflective layer(s).

The diffusion barrier layer may comprise (e.g., be formed from, consist essentially of, or consist of) a ceramic. The ceramic may be an inert ceramic, for example, a ceramic which is inert (i.e. chemically unreactive) at elevated temperatures (e.g., at temperatures at which the component is typically used). For example, the diffusion barrier layer may comprise (e.g., be formed from, consist essentially of, or consist of) a metal oxide and/or a metal nitride. For example, the diffusion barrier layer may comprise (e.g., be formed from, consist essentially of, or consist of) titania, zirconia, hafnia, chromia or alumina. The metal oxide and/or the metal nitride (e.g., zirconia) may be stabilised. For example, the metal oxides and/or the metal nitride may be stabilised by an alkaline earth metal oxide and/or a rare earth metal oxide such as calcia, magnesia, ceria, yttria or scandia. For example, the diffusion barrier layer may comprise (e.g., be formed from, consist essentially of, or consist of) yttria-stabilised zirconia (YSZ).

The diffusion barrier layer may have a thickness of no greater than about 2 mm, for example, no greater than about 1 mm, or no greater than about 100 μm, for example, no greater than about 75 μm, or no greater than about 50 μm, or no greater than about 25 μm. The diffusion barrier layer may have a thickness of no less than about 1 μm, for example, no less than about 5 μm, or no less than about 10 μm, or no less than about 25 μm, or no less than about 50 μm. The diffusion barrier layer may have a thickness from about 1 μm to about 2 mm, for example, from about 1 μm to about 1 mm, or from about 1 μm to about 100 μm, or from about 1 μm to about 75 μm, or from about 1 μm to about 50 μm, or from about 1 μm to about 25 μm, or from about 5 μm to about 100 μm, or from about 5 μm to about 75 μm, or from about 5 μm to about 50 μm, or from about 5 μm to about 25 μm, or from about 10 μm to about 100 μm, for example, from about 10 μm to about 75 μm, or from about 10 μm to about 50 μm, or from about 25 μm to about 100 μm, or from about 25 μm to about 75 μm, or from about 25 μm to about 50 μm, or from about 50 μm to about 100 μm, or from about 50 μm to about 75 μm.

The infrared-reflective layer may be in direct contact with the diffusion barrier layer. For example, the infrared-reflective layer may be formed directly on the diffusion barrier layer. Alternatively, there may be one or more other material layers between the diffusion barrier layer and the infrared-reflective layer.

The component may comprise a bond layer between the substrate and the diffusion barrier layer. The bond layer may be configured to bond (e.g., improve or enhance bonding of) the diffusion barrier layer to the substrate.

The bond layer may comprise (e.g., be formed from, consist essentially of, or consist of) metal. For example, the bond layer may comprise (e.g., be formed from, consist essentially of, or consist of) one or more metal elements, for example, in the form of an alloy. Additionally or alternatively, the bond layer may comprise (e.g., be formed from, consist essentially of, or consist of) silicon. Accordingly, the bond layer may comprise (e.g., be formed from, consist essentially of, or consist of) at least one of nickel, cobalt, chromium, aluminium, silicon, platinum, yttrium and/or any combination thereof. For example, the bond layer may comprise (e.g., be formed from, consist essentially of, or consist of) an alloy comprising at least one of nickel, cobalt, chromium, aluminium, silicon, platinum, yttrium and/or any combination thereof. For example, the bond layer may comprise (e.g., be formed from, consist essentially of, or consist of) a NiCrAlY alloy, a NiCoCrAlY alloy, a NiAl alloy, a PtAl alloy, and/or any combination thereof. It will be appreciated that a suitable bond layer may be selected based on the composition of the substrate and the diffusion barrier layer.

The bond layer may have a thickness of no greater than about 200 μm, for example, no greater than about 150 μm, or no greater than about 100 μm, or no greater than about 50 μm, or no greater than about 25

μm, or no greater than about 10 μm, or no greater than about 5 μm. The bond layer may have a thickness no less than about 500 nm, for example, no less than about 750 nm, or no less than about 1 μm, or no less than about 5 μm, or no less than about 10 μm, or no less than about 20 μm. The bond layer may have a thickness from about 500 nm to about 200 μm, for example, from about 500 nm to about 150 μm, or from about 500 nm to about 100 μm, or from about 500 nm to about 50 μm, or from about 500 nm to about 25 μm, or from about 500 nm to about 10 μm, or from about 500 nm to about 5 μm, or from about 750 nm to about 200 μm, or from about 750 nm to about 150 μm, or from about 750 nm to about 100 μm, or from about 750 nm to about 50 μm, or from about 750 nm to about 25 μm, or from about 750 nm to about 10 μm, or from about 750 nm to about 5 μm, or from about 1 μm to about 200 μm, or from about 1 μm to about 150 μm, or from about 1 μm to about 100 μm, or from about 1 μm to about 50 μm, or from about 1 μm to about 25 μm, or from about 1 μm to about 10 μm, or from about 1 μm to about 5 μm, or from about 5 μm to about 200 μm, or from about 5 μm to about 150 μm, or from about 5 μm to about 100 μm, or from about 5 μm to about 50 μm, or from about 5 μm to about 25 μm, or from about 5 μm to about 10 μm, or from about 10 μm to about 200 μm, or from about 10 μm to about 150 μm, or from about 10 μm to about 100 μm, or from about 10 μm to about 50 μm, or from about 10 μm to about 25 μm, or from about 20 μm to about 200 μm, or from about 20 μm to about 150 μm, or from about 20 μm to about 100 μm, or from about 20 μm to about 50 μm.

It may be that component comprises an oxide layer between the bond layer and the diffusion barrier layer. The oxide layer may be a thermally grown oxide layer. The oxide layer may assist in bonding the bond layer to the diffusion barrier layer. The oxide layer may have a thickness of no greater than about 200 μm, for example, no greater than about 150 μm, or no greater than about 100 μm, or no greater than about 50 μm, or no greater than about 25 μm, or no greater than about 10 μm, or no greater than about 5 μm. The oxide layer may have a thickness no less than about 500 nm, for example, no less than about 750 nm, or no less than about 1 μm, or no less than about 5 μm, or no less than about 10 μm, or no less than about 20 μm. The oxide layer may have a thickness from about 500 nm to about 200 μm, for example, from about 500 nm to about 150 μm, or from about 500 nm to about 100 μm, or from about 500 nm to about 50 μm, or from about 500 nm to about 25 μm, or from about 500 nm to about 10 μm, or from about 500 nm to about 5 μm, or from about 750 nm to about 200 μm, or from about 750 nm to about 150 μm, or from about 750 nm to about 100 μm, or from about 750 nm to about 50 μm, or from about 750 nm to about 25 μm, or from about 750 nm to about 10 μm, or from about 750 nm to about 5 μm, or from about 1 μm to about 200 μm, or from about 1 μm to about 150 μm, or from about 1 μm to about 100 μm, or from about 1 μm to about

50 μm, or from about 1 μm to about 25 μm, or from about 1 μm to about 10 μm, or from about 1 μm to about 5 μm, or from about 5 μm to about 200 μm, or from about 5 μm to about 150 μm, or from about 5 μm to about 100 μm, or from about 5 μm to about 50 μm, or from about 5 μm to about 25 μm, or from about 5 μm to about 10 μm, or from about 10 μm to about 200 μm, or from about 10 μm to about 150 μm, or from about 10 μm to about 100 μm, or from about 10 μm to about 50 μm, or from about 10 μm to about 25 μm, or from about 20 μm to about 200 μm, or from about 20 μm to about 150 μm, or from about 20 μm to about 100 μm, or from about 20 μm to about 50 μm.

The component may comprise a thermal barrier coating layer. The thermal barrier coating layer may comprise (e.g., be formed from, consist essentially of, or consist of) any suitable material known in the art. For example, the thermal barrier coating layer may comprise (e.g., be formed from, consist essentially of, or consist of) a ceramic. The ceramic may be an inert ceramic, for example, a ceramic which is inert (i.e., chemically unreactive) at elevated temperatures (e.g., at temperatures at which the component is typically used). For example, the thermal barrier coating layer may comprise (e.g., be formed from, consist essentially of, or consist of) titania, zirconia, hafnia, chromia or alumina. The metal oxide and/or the metal nitride may be stabilised. For example, the metal oxides and/or the metal nitride may be stabilised by an alkaline earth metal oxide and/or a rare earth metal oxide such as calcia, magnesia, ceria, yttria or scandia. For example, the thermal barrier coating layer may comprise (e.g., be formed from, consist essentially of, or consist of) yttria-stabilised zirconia (YSZ).

The thermal barrier coating layer may have a thickness of no greater than about 2 mm, for example, no greater than about 1 mm, or no greater than about 500 μm, or no greater than about 250 μm, or no greater than about 100 μm, or no greater than about 75 μm, or no greater than about 50 μm, or no greater than about 25 μm. The thermal barrier coating layer may have a thickness of no less than about 10 μm, for example, no less than about 25 μm, or no less than about 50 μm, or no less than about 100 μm, or no less than about 500 μm, or no less than about 1 mm. The thermal barrier coating layer may have a thickness from about 1 μm to about 2 mm, for example, from about 1 μm to about 1 mm, or from about 1 μm to about 500 μm, or from about 10 μm to about 100 μm, or from about 10 μm to about 75 μm, or from about 10 μm to about 50 μm, or from about 25 μm to about 100 μm, or from about 25 μm to about 75 μm, or from about 25 μm to about 50 μm, or from about 50 μm to about 100 μm, or from about 50 μm to about 75 μm, or from about 100 μm to about 2 mm, or from about 100 μm to about 1 mm, or from about 100 μm to about 500 μm, or from about 500 μm to about 2 mm, or from about 500 μm to about 1 mm, or from about 1 mm to about 2 mm.

The thermal barrier coating layer may function as a diffusion barrier layer as described hereinabove. Accordingly, the thermal barrier coating layer may be the diffusion barrier layer as described hereinabove.

In some examples, the component does not comprise a thermal barrier coating layer.

It may be that the component comprises the substrate and a stack of coating layers comprising the infrared-reflective layer(s), the diffusion barrier layer (if present), the thermal barrier coating layer (if present), the bond layer (if present) and the oxide layer (if present). It may be that the stack of coating layers has a total thickness no greater than about 2 mm, for example, no greater than about 1 mm, or no greater than about 500 $\mu$m, or no greater than about 400 $\mu$m, or no greater than about 300 $\mu$m, or no greater than about 200 $\mu$m, or no greater than about 100 $\mu$m, or no greater than about 75 $\mu$m, or no greater than about 50 $\mu$m, or no greater than about 40 $\mu$m, or no greater than about 30 $\mu$m, or no greater than about 20 $\mu$m, or no greater than about 10 $\mu$m. It may be that the stack of coating layers has a total thickness no less than about 1 $\mu$m, for example, no less than about 5 $\mu$m, or no less than about 10 $\mu$m, or no less than about 15 $\mu$m, or no less than about 20 $\mu$m, or no less than about 30 $\mu$m, or no less than about 40 $\mu$m, or no less than about 50 $\mu$m, or no less than about 100 $\mu$m, or no less than about 200 $\mu$m, or no less than about 500 $\mu$m, or no less than about 1 mm. It may be that the stack of coating layers has a total thickness from about 1 $\mu$m to about 2 mm, for example, from about 1 mm to about 1 mm, or from about 1 $\mu$m to about 500 $\mu$m, or from about 1 $\mu$m to about 400 $\mu$m, or from about 1 $\mu$m to about 300 $\mu$m, or from about 1 $\mu$m to about 200 $\mu$m, or from about 1 $\mu$m to about 100 $\mu$m, or from about 1 $\mu$m to about 75 $\mu$m, or from about 1 $\mu$m to about 50 $\mu$m, or from about 1 $\mu$m to about 40 $\mu$m, or from about 1 $\mu$m to about 30 $\mu$m, or from about 1 $\mu$m to about 20 $\mu$m, or from about 1 $\mu$m to about 10 $\mu$m, or from about 5 $\mu$m to about 1 mm, or from about 5 $\mu$m to about 500 $\mu$m, or from about 5 $\mu$m to about 400 $\mu$m, or from about 5 $\mu$m to about 300 $\mu$m, or from about 5 $\mu$m to about 200 $\mu$m, or from about 5 $\mu$m to about 100 $\mu$m, or from about 5 $\mu$m to about 75 $\mu$m, or from about 5 $\mu$m to about 50 $\mu$m, or from about 5 $\mu$m to about 40 $\mu$m, or from about 5 $\mu$m to about 30 $\mu$m, or from about 5 $\mu$m to about 20 $\mu$m, or from about 5 $\mu$m to about 10 $\mu$m, or from about 10 $\mu$m to about 1 mm, or from about 10 $\mu$m to about 500 $\mu$m, or from about 10 $\mu$m to about 400 $\mu$m, or from about 10 $\mu$m to about 300 $\mu$m, or from about 10 $\mu$m to about 200 $\mu$m, or from about 10 $\mu$m to about 100 $\mu$m, or from about 10 $\mu$m to about 75 $\mu$m, or from about 10 $\mu$m to about 50 $\mu$m, or from about 10 $\mu$m to about 40 $\mu$m, or from about 10 $\mu$m to about 30 $\mu$m, or from about 10 $\mu$m to about 20 $\mu$m, or from about 15 $\mu$m to about 1 mm, or from about 15 $\mu$m to about 500 $\mu$m, or from about 15 $\mu$m to about 400 $\mu$m, or from about 15 $\mu$m to about 300 $\mu$m, or from about 15 $\mu$m to about 200 $\mu$m, or from about 15 $\mu$m to about 100 $\mu$m, or from about 15 $\mu$m to about 75 $\mu$m, or from about 15 $\mu$m to about 50 $\mu$m, or from about 15 $\mu$m to about 40 $\mu$m, or from about 15 $\mu$m to about 30 $\mu$m, or from about 15 $\mu$m to about 20 $\mu$m, or from about 20 $\mu$m to about 1 mm, or from about 20 $\mu$m to about 500 $\mu$m, or from about 20 $\mu$m to about 400 $\mu$m, or from about 20 $\mu$m to about 300 $\mu$m, or from about 20 $\mu$m to about 200 $\mu$m, or from about 20 $\mu$m to about 100 $\mu$m, or from about 20 $\mu$m to about 75 $\mu$m, or from about 20 $\mu$m to about 50 $\mu$m, or from about 20 $\mu$m to about 40 $\mu$m, or from about 20 $\mu$m to about 30 $\mu$m, or from about 30 $\mu$m to about 1 mm, or from about 30 $\mu$m to about 500 $\mu$m, or from about 30 $\mu$m to about 400 $\mu$m, or from about 30 $\mu$m to about 300 $\mu$m, or from about 30 $\mu$m to about 200 $\mu$m, or from about 30 $\mu$m to about 100 $\mu$m, or from about 30 $\mu$m to about 75 $\mu$m, or from about 30 $\mu$m to about 50 $\mu$m, or from about 30 $\mu$m to about 40 $\mu$m, or from about 40 $\mu$m to about 1 mm, or from about 40 $\mu$m to about 500 $\mu$m, or from about 40 $\mu$m to about 400 $\mu$m, or from about 40 $\mu$m to about 300 $\mu$m, or from about 40 $\mu$m to about 200 $\mu$m, or from about 40 $\mu$m to about 100 $\mu$m, or from about 40 $\mu$m to about 75 $\mu$m, or from about 40 $\mu$m to about 50 $\mu$m, or from about 50 $\mu$m to about 1 mm, or from about 50 $\mu$m to about 500 $\mu$m, or from about 50 $\mu$m to about 400 $\mu$m, or from about 50 $\mu$m to about 300 $\mu$m, or from about 50 $\mu$m to about 200 $\mu$m, or from about 50 $\mu$m to about 100 $\mu$m, or from about 50 $\mu$m to about 75 $\mu$m, or from about 100 $\mu$m to about 2 mm, or from about 100 $\mu$m to about 1 mm, or from about 100 $\mu$m to about 500 $\mu$m, or from about 200 $\mu$m to about 2 mm, or from about 200 $\mu$m to about 1 mm, or from about 200 $\mu$m to about 500 $\mu$m, or from about 500 $\mu$m to about 2 mm, or from about 500 $\mu$m to about 1 mm, or from about 1 mm to about 2 mm.

The substrate may comprise (e.g., be formed from, consist essentially of, or consist of) metal. For example, the substrate may comprise (e.g., be formed from, consist essentially of, or consist of) one or more metal elements, for example, in the form of an alloy. For example, the substrate may comprise (e.g., be formed from, consist essentially of, or consist of) a ferrous alloy (e.g., a cast iron or a steel) or a non-ferrous alloy (e.g., an aluminium-based alloy or a titanium-based alloy). The substrate may comprise (e.g., be formed from, consist essentially of, or consist of) a superalloy, such as a nickel-based superalloy, a cobalt-based superalloy or an iron-based superalloy. A superalloy substrate may be particularly suitable for use at elevated temperatures.

The substrate may be monocrystalline (i.e., single-crystal). For example, the substrate may comprise (e.g., be formed from, consist essentially of, or consist of) a monocrystalline superalloy. Alternatively, the substrate may be polycrystalline or amorphous.

Alternatively, the substrate may comprise (e.g., be formed from, consist essentially of, or consist of) a composite material. For example, the substrate may comprise (e.g., be formed from, consist essentially of, or consist of) a fibre-reinforced composite material, a ceramic matrix composite material, a metal matrix composite material and/or a cermet composite material.

A fibre-reinforced composite material is a composite material comprising a fibre-based reinforcement embedded in a matrix. The fibre-reinforced composite material may be a fibre-reinforced polymeric material such as carbon fibre reinforced plastic or fibreglass.

A ceramic matrix composite material is a composite material comprising a ceramic reinforcement (e.g., ceramic fibres or particulates) embedded in a ceramic matrix. The ceramic reinforcement may comprise (e.g., consist of) materials such as carbon, boron, silicon carbide, silicon nitride, alumina and/or mullite. The ceramic matrix may comprise (e.g., consist of) materials such as carbon, boron, silicon carbide, silicon nitride, alumina and/or mullite.

A metal matrix composite material is a composite material comprising a ceramic reinforcement (e.g., ceramic fibres or particulates) embedded in a metal matrix. The ceramic reinforcement may comprise (e.g., consist of) materials such as carbon, boron, silicon carbide, silicon nitride, alumina and/or mullite. The metal matrix may comprise (e.g., consist of) materials such as aluminium, magnesium, titanium, cobalt, nickel, ferrous alloys (e.g., cast iron or steel), non-ferrous alloys (e.g., aluminium-based alloys or titanium-based alloys) and/or superalloys (nickel-based superalloys, cobalt-based superalloys or iron-based superalloys).

A cermet is a composite material is a composite material comprising ceramic material bound together by metal. Cermet composite materials typically comprise less than 20 % metal by volume. The ceramic material may comprise (e.g., consist of) oxides, carbides and/or borides (e.g., titanium nitride, titanium carbonitride, titanium carbide, tungsten carbide, etc.). The metal may comprise (e.g., consist of) nickel, molybdenum and/or cobalt.

The substrate may be additively manufactured (e.g., 3D-printed). For example, the substrate may be manufactured by selective laser sintering, selective laser melting, electron-beam melting, and the like. Alternatively, the substrate may be cast, sintered, formed, machined, etc.

The component may comprise a cooling system. The cooling system may be configured to cool the component, or at least a surface thereof, in use. For example, the component (e.g., the substrate) may comprise a plurality of cooling channels configured to receive a flow of cooling air. The plurality of cooling channels may be configured (e.g., sized, shaped and/or arranged) to generate a cooling film of air across the surface of the component in use. The cooling film of air may convectively isolate the component (e.g., the substrate) from hotter gases in use.

Each of the cooling channels may comprise a vent at the surface of the component. An aerothermal porosity of the surface of the component comprising the vents may be defined as the measured effective area of the vents per unit footprint area of the surface (i.e. a ratio of the measured effective area of the vents in a given region of the surface divided by the footprint area of that region of the surface). The measured effective area of the vents is obtained by multiplying the geometric area of said vents (i.e., in the surface plane) by their discharge coefficient. The footprint area of a region is the total area of the region (i.e., in the surface plane) including the areas of the vents within that region. The aerothermal porosity may be expressed as a percentage. The surface of the component having the vents may have an aerothermal porosity no greater than about 20 %, for example, no greater than about 10 %, or no greater than about 5 %, or no greater than about 1 %, or no greater than about 0.5 %. The surface of the component having the vents may have an aerothermal porosity no less than about 0.1 %, for example, no less than about 0.5 %, or no less than about 1 %, or no less than about 5 %, or no less than about 10 %, or no less than about 15 %, or no less than about 20 %.

The component may comprise the substrate, the diffusion barrier layer and the infrared-reflective layer(s).

The component may comprise the substrate, the bond layer, the diffusion barrier layer and the infrared-reflective layer(s).

The component may comprise the substrate, the bond layer, the oxide layer, the diffusion barrier layer and the infrared-reflective layer(s).

The component may comprise the substrate, the bond layer, the thermal barrier coating layer, the diffusion barrier layer and the infrared-reflective layer(s).

The component may comprise the substrate, the bond layer, the oxide layer, the thermal barrier coating layer, the diffusion barrier layer and the infrared-reflective layer(s).

In some examples, the component comprises the infrared-reflective layer(s) formed directly on the substrate. For example, the component may comprise the substrate and the infrared-reflective layer(s) formed directly thereon.

The component may comprise: the substrate comprising a superalloy; the diffusion barrier layer; and the infrared-reflective layer(s) comprising a noble metal. For example, the component may comprise: the substrate comprising a superalloy; the diffusion barrier layer; and the infrared-reflective layer(s) comprising gold and/or platinum. The component may comprise: the substrate comprising a nickel-based superalloy; the diffusion barrier layer; and the infrared-reflective layer(s). The component may comprise: the substrate comprising a nickel-based superalloy; the diffusion barrier layer; and the infrared-reflective layer(s) comprising gold and/or platinum. The component may comprise: the substrate comprising a nickel-based superalloy; the diffusion barrier layer; and the infrared-reflective layer(s) comprising a gold and platinum alloy. The component may comprise: the substrate comprising a nickel-based superalloy; the bond layer; the diffusion barrier layer; and the infrared-reflective layer(s) comprising gold and/or platinum, e.g., a gold and platinum alloy. The component may comprise:

the substrate comprising a nickel-based superalloy; the bond layer; the diffusion barrier layer; and the infrared-reflective layer(s) comprising gold and/or platinum, e.g., a gold and platinum alloy; wherein the component (e.g., the substrate) comprises a plurality of cooling channels configured (e.g., sized, shaped and/or arranged) to generate a cooling film of air across a surface of the component in use.

The component may comprise: the substrate; and the infrared-reflective layer(s) comprising a noble metal; wherein the infrared-reflective layer (or the outermost infrared-reflective layer, where the component comprises two or more infrared-reflective layers) has an arithmetic average roughness $R_a$ or $S_a$ of no greater than about 5 $\mu$m, for example, no greater than about 4 $\mu$m, or no greater than about 3 $\mu$m, or no greater than about 2 $\mu$m, or no greater than about 1 $\mu$m, or no greater than about 0.75 $\mu$m, or no greater than about 0.5 $\mu$m.

The component may comprise: the substrate; and the infrared-reflective layer(s) comprising gold and/or platinum; wherein the infrared-reflective layer (or the outermost infrared-reflective layer, where the component comprises two or more infrared-reflective layers) has an arithmetic average roughness $R_a$ or $S_a$ of no greater than about 5 $\mu$m, for example, no greater than about 4 $\mu$m, or no greater than about 3 $\mu$m, or no greater than about 2 $\mu$m, or no greater than about 1 $\mu$m, or no greater than about 0.75 $\mu$m, or no greater than about 0.5 $\mu$m, or no greater than about 0.1 $\mu$m.

The component may comprise: the substrate comprising a superalloy; and the infrared-reflective layer(s) comprising a noble metal; wherein the infrared-reflective layer (or the outermost infrared-reflective layer, where the component comprises two or more infrared-reflective layers) has an arithmetic average roughness $R_a$ or $S_a$ of no greater than about 5 $\mu$m, for example, no greater than about 4 $\mu$m, or no greater than about 3 $\mu$m, or no greater than about 2 $\mu$m, or no greater than about 1 $\mu$m, or no greater than about 0.75 $\mu$m, or no greater than about 0.5 $\mu$m, or no greater than about 0.1 $\mu$m.

The component may comprise: the substrate comprising a superalloy; and the infrared-reflective layer(s) comprising gold and/or platinum; wherein the infrared-reflective layer (or the outermost infrared-reflective layer, where the component comprises two or more infrared-reflective layers) has an arithmetic average roughness $R_a$ or $S_a$ of no greater than about 5 $\mu$m, for example, no greater than about 4 $\mu$m, or no greater than about 3 $\mu$m, or no greater than about 2 $\mu$m, or no greater than about 1 $\mu$m, or no greater than about 0.75 $\mu$m, or no greater than about 0.5 $\mu$m, or no greater than about 0.1 $\mu$m.

The component may comprise: the substrate comprising a superalloy; the diffusion barrier layer; and the infrared-reflective layer(s) comprising a noble metal; wherein the infrared-reflective layer (or the outermost infrared-reflective layer, where the component comprises two or more infrared-reflective layers) has an arithmetic

average roughness $R_a$ or $S_a$ of no greater than about 5 $\mu$m, for example, no greater than about 4 $\mu$m, or no greater than about 3 $\mu$m, or no greater than about 2 $\mu$m, or no greater than about 1 $\mu$m, or no greater than about 0.75 $\mu$m, or no greater than about 0.5 $\mu$m, or no greater than about 0.1 $\mu$m. For example, the component may comprise: the substrate comprising a superalloy; the diffusion barrier layer; and the infrared-reflective layer(s) comprising gold and/or platinum. The component may comprise: the substrate comprising a nickel-based superalloy; the diffusion barrier layer; and the infrared-reflective layer(s); wherein the infrared-reflective layer (or the outermost infrared-reflective layer, where the component comprises two or more infrared-reflective layers) has an arithmetic average roughness $R_a$ or $S_a$ of no greater than about 5 $\mu$m, for example, no greater than about 4 $\mu$m, or no greater than about 3 $\mu$m, or no greater than about 2 $\mu$m, or no greater than about 1 $\mu$m, or no greater than about 0.75 $\mu$m, or no greater than about 0.5 $\mu$m, or no greater than about 0.1 $\mu$m. The component may comprise: the substrate comprising a nickel-based superalloy; the diffusion barrier layer; and the infrared-reflective layer(s) comprising gold and/or platinum; wherein the infrared-reflective layer (or the outermost infrared-reflective layer, where the component comprises two or more infrared-reflective layers) has an arithmetic average roughness $R_a$ or $S_a$ of no greater than about 5 $\mu$m, for example, no greater than about 4 $\mu$m, or no greater than about 3 $\mu$m, or no greater than about 2 $\mu$m, or no greater than about 1 $\mu$m, or no greater than about 0.75 $\mu$m, or no greater than about 0.5 $\mu$m, or no greater than about 0.1 $\mu$m. The component may comprise: the substrate comprising a nickel-based superalloy; the diffusion barrier layer; and the infrared-reflective layer(s) comprising a gold and platinum alloy; wherein the infrared-reflective layer (or the outermost infrared-reflective layer, where the component comprises two or more infrared-reflective layers) has an arithmetic average roughness $R_a$ or $S_a$ of no greater than about 5 $\mu$m, for example, no greater than about 4 $\mu$m, or no greater than about 3 $\mu$m, or no greater than about 2 $\mu$m, or no greater than about 1 $\mu$m, or no greater than about 0.75 $\mu$m, or no greater than about 0.5 $\mu$m, or no greater than about 0.1 $\mu$m. The component may comprise: the substrate comprising a nickel-based superalloy; the bond layer; the diffusion barrier layer; and the infrared-reflective layer(s) comprising gold and/or platinum, e.g., a gold and platinum alloy; wherein the infrared-reflective layer (or the outermost infrared-reflective layer, where the component comprises two or more infrared-reflective layers) has an arithmetic average roughness $R_a$ or $S_a$ of no greater than about 5 $\mu$m, for example, no greater than about 4 $\mu$m, or no greater than about 3 $\mu$m, or no greater than about 2 $\mu$m, or no greater than about 1 $\mu$m, or no greater than about 0.75 $\mu$m, or no greater than about 0.5 $\mu$m, or no greater than about 0.1 $\mu$m. The component may comprise: the substrate comprising a nickel-based superalloy; the bond layer; the diffusion barrier layer; and the infrared-reflective layer(s) comprising gold and/or platinum, e.g., a gold and platinum alloy; wherein the infrared-reflective layer (or the outermost infrared-reflective layer, where the component comprises two or more infrared-reflective layers) has an arithmetic average roughness $R_a$ or $S_a$ of no greater than about 5 μm, for example, no greater than about 4 μm, or no greater than about 3 μm, or no greater than about 2 μm, or no greater than about 1 μm, or no greater than about 0.75 μm, or no greater than about 0.5 μm, or no greater than about 0.1 μm; and wherein the component (e.g., the substrate) comprises a plurality of cooling channels configured (e.g., sized, shaped and/or arranged) to generate a cooling film of air across a surface of the component in use.

The component may comprise: the substrate comprising a composite material such as a ceramic matrix composite material; and the infrared-reflective layer(s) comprising a noble metal. For example, the component may comprise: the substrate comprising a composite material such as a ceramic matrix composite material; and the infrared-reflective layer(s) comprising gold and/or platinum. The component may comprise: the substrate comprising a ceramic matrix composite material; and the infrared-reflective layer(s). The component may comprise: the substrate comprising a ceramic matrix composite material; and the infrared-reflective layer(s) comprising a noble metal. The component may comprise: the substrate comprising a ceramic matrix composite material; and the infrared-reflective layer(s) comprising gold and/or platinum. The component may comprise: the substrate comprising a composite material such as a ceramic matrix composite material; and the infrared-reflective layer(s) comprising a noble metal such as gold and/or platinum; wherein the component (e.g., the substrate) comprises a plurality of cooling channels configured (e.g., sized, shaped and/or arranged) to generate a cooling film of air across a surface of the component in use.

The component may comprise: the substrate comprising a composite material such as ceramic matrix composite material; and the infrared-reflective layer(s) comprising a noble metal; wherein the infrared-reflective layer (or the outermost infrared-reflective layer, where the component comprises two or more infrared-reflective layers) has an arithmetic average roughness $R_a$ or $S_a$ of no greater than about 5 μm, for example, no greater than about 4 μm, or no greater than about 3 μm, or no greater than about 2 μm, or no greater than about 1 μm, or no greater than about 0.75 μm, or no greater than about 0.5 μm, or no greater than about 0.1 μm.

The component may comprise: the substrate comprising a composite material such as ceramic matrix composite material; and the infrared-reflective layer(s) comprising gold and/or platinum; wherein the infrared-reflective layer (or the outermost infrared-reflective layer, where the component comprises two or more infrared-reflective layers) has an arithmetic average roughness $R_a$ or $S_a$ of no greater than about 5 μm, for example, no greater than about 4 μm, or no greater than about 3 μm, or no greater than about 2 μm, or no greater than about 1 μm, or no greater than about 0.75 μm, or no greater than about 0.5 μm, or no greater than about 0.1 μm.

The component may comprise: the substrate comprising a composite material such as ceramic matrix composite material; and the infrared-reflective layer(s) comprising gold and/or platinum; wherein the infrared-reflective layer (or the outermost infrared-reflective layer, where the component comprises two or more infrared-reflective layers) has an arithmetic average roughness $R_a$ or $S_a$ of no greater than about 5 μm, for example, no greater than about 4 μm, or no greater than about 3 μm, or no greater than about 2 μm, or no greater than about 1 μm, or no greater than about 0.75 μm, or no greater than about 0.5 μm, or no greater than about 0.1 μm; and wherein the component (e.g., the substrate) comprises a plurality of cooling channels configured (e.g., sized, shaped and/or arranged) to generate a cooling film of air across a surface of the component in use.

The component may be a component for the hot section of a gas turbine engine.

The component may be a component for a combustor section of a gas turbine engine. For example, the component may be a combustor or part thereof, a combustor cassette, a combustor tile, or an injector.

The component may be a component for a turbine section of a gas turbine engine. For example, the component may be a turbine vane, a turbine blade, or a turbine seal segment.

The component may be a component for an exhaust section of a gas turbine engine.

The component may be a component for a reheat section of a gas turbine engine.

The component may be a component for (i.e., the hot section of) a reaction engine. For example, the component may be a component for (i.e., the hot section of) a rocket engine.

The component may be a component for (i.e., the hot section of) a ramjet engine.

It will be appreciated that the hot section of an engine is a section of the engine which is exposed to elevated temperatures during use. In some cases, dependent on the engine design, the hot section of an engine may be the entirety of the engine.

The engine may be for use in an aircraft (e.g., a civil aircraft or a military aircraft), a watercraft (e.g., a ship or a submarine), a spacecraft, a projectile (e.g., a rocket) or a power station.

According to a second aspect of the present disclosure, there is provided an engine comprising the component according to the first aspect.

According to a third aspect of the present disclosure, there is provided an apparatus comprising the engine according to the second aspect.

The apparatus may be an aircraft (e.g., a civil aircraft or a military aircraft), a watercraft (e.g., a ship or a submarine), a spacecraft, a projectile (e.g., a rocket) or a power station.

According to a fourth aspect of the present disclosure, there is provided a method of manufacturing a component for an engine. The method comprises forming an infrared-reflective layer on a substrate. The infrared-reflective layer is configured to reflect infrared radiation away from the substrate.

The component may be the component according to the first aspect. Accordingly, the component, the engine, the infrared-reflective layer and the substrate may have any of the properties (for example, physical or chemical properties (including reflectances and/or emissivities), material compositions, layer thicknesses, and the like) of the corresponding features as described herein with regard to the first aspect.

Forming the infrared-reflective layer may comprise depositing the infrared-reflective layer. For example, forming the infrared-reflective layer may comprise depositing the at least one infrared-reflective material. For example, forming the infrared-reflective layer may comprise depositing one or more of gold, platinum, silver, ruthenium, rhodium, palladium, osmium, iridium, beryllium, magnesium, aluminium, chromium, nickel, copper, zinc, palladium, silver, tin, tungsten, platinum, gold, lead, and/or any combination thereof. Forming the infrared-reflective layer may comprise depositing one or more of gold, platinum, silver, ruthenium, rhodium, palladium, osmium, iridium, and/or any combination thereof. Forming the infrared-reflective layer may comprise depositing gold and/or platinum.

Forming the infrared-reflective layer may comprise depositing two or more different infrared-reflective materials. The method may comprise depositing the two or more different infrared-reflective materials concurrently or sequentially. For example, the method may comprise depositing a sub-layer of a first infrared-reflective material and then depositing a sub-layer of a second, different infrared-reflective material.

Forming the infrared-reflective layer may comprise depositing a gold and platinum alloy. Depositing a gold and platinum alloy may comprise: depositing gold and platinum concurrently; or depositing a layer of gold and depositing a layer of platinum (or vice versa) sequentially and then heating the layer of gold and the layer of platinum to cause diffusion and/or melting. Heating the layer of gold and the layer of platinum to cause diffusion and/or melting may take place during use of the component in an engine or it may take place during a heat treatment carried out before use of the component.

The method may comprise depositing a layer of the at least one infrared-reflective material to form the infrared-reflective layer. It may be that the at least one infrared-reflective layer is formed (e.g., entirely) from the deposited at least one infrared-reflective material.

The method may comprise forming two or more infrared-reflective layers configured to reflect infrared radiation away from the substrate. For example, the method may comprise forming at least two, at least three, at least four, or at least five, infrared-reflective layers configured to reflect infrared radiation away from the substrate. The method may comprise forming the two or more infrared-reflective layers having substantially the same properties (for example, they may have substantially the same reflectances and/or emissivities, they may be formed from the same materials, they may have the same thicknesses, etc.) or having different properties (for example, they may have different reflectances and/or emissivities, they may be formed from different materials, they may have different thicknesses, etc). The method may comprise forming the two or more infrared-reflective layers stacked on top of one another. For example, the method may comprise forming the two or more infrared-reflective layers stacked directly on top of one another, i.e., such that each of the two or more infrared-reflective layers is in direct contact with at least one other infrared-reflective layer.

The method may comprise forming the infrared-reflective layer(s) by physical vapour deposition (PVD), by chemical vapour deposition (CVD) or by electroplating. The method may comprise depositing the at least one infrared-reflective material(s) by physical vapour deposition (PVD), by chemical vapour deposition (CVD) or by electroplating. It will be appreciated that a suitable deposition method may be selected based on the shape and size of the substrate or the component and the materials to be used.

The method may comprise depositing the infrared-reflective material(s) directly on the substrate (i.e., such that the infrared-reflective material(s) come into direct contact with the substrate). Alternatively, the method may comprise depositing the infrared-reflective material(s) onto one or more intervening material layers between the substrate and the infrared-reflective layer(s).

For example, the method may comprise forming the infrared-reflective layer on a diffusion barrier layer. The diffusion barrier layer may have any of the properties discussed herein with regard to the diffusion barrier layer of the first aspect. The method may comprise forming the infrared-reflective layer directly on the diffusion barrier layer.

The method may comprise forming the diffusion barrier layer on the substrate (and forming the infrared-reflective layer on the diffusion barrier layer). Forming the diffusion barrier layer may comprise depositing the diffusion barrier layer by electroplating, by thermal spraying, by physical vapour deposition (PVD), or by chemical vapour deposition (CVD). It will be appreciated that a suitable deposition method may be selected based on the shape and size of the substrate or the component and the materials to be used.

The method may comprise forming the diffusion barrier layer directly on the substrate. Alternatively, the method may comprise forming the diffusion barrier layer on one or more intervening layers between the substrate and the diffusion barrier layer.

The method may comprise forming the diffusion barrier layer on a bond layer. The bond layer may have any of the properties discussed herein with regard to the bond layer of the first aspect. The method may comprise forming the diffusion barrier layer directly on the bond layer.

The method may comprise forming the bond layer on the substrate (and forming the diffusion barrier layer on the bond layer). Forming the bond layer may comprise depositing the bond layer by physical vapour deposition (PVD) or by chemical vapour deposition (CVD). It will be appreciated that a suitable deposition method may be selected based on the shape and size of the substrate or the component and the materials to be used.

The method may comprise forming the bond layer directly on the substrate. Alternatively, the method may comprise forming the bond layer on one or more intervening layers between the substrate and the bond layer.

An oxide layer may be provided between the bond layer and the diffusion barrier layer. The method may comprise forming the oxide layer. The method may comprise forming the oxide layer prior to forming the diffusion barrier layer. For example, the method may comprise forming the oxide layer and then forming the diffusion barrier layer on the oxide layer. Alternatively, the method may comprise forming the oxide layer subsequent to forming the diffusion barrier layer. For example, the method may comprise forming the diffusion barrier layer on the bond layer and then forming the oxide layer between (e.g., at an interface between) the bond layer and the diffusion barrier layer.

The oxide layer may be a thermally grown oxide layer. The method may comprise forming the diffusion barrier layer on the bond layer and then forming the oxide layer between (e.g., at an interface between) the bond layer and the diffusion barrier layer by heating the bond layer and the diffusion barrier layer (e.g., by heating the substrate or the component). The oxide layer may be formed when the component is subjected to elevated temperatures during use.

The method may comprise forming the infrared-reflective layer having a surface having an arithmetic average roughness $R_a$ or $S_a$ of no greater than about 5 $\mu$m, for example, no greater than about 4 $\mu$m, or no greater than about 3 $\mu$m, or no greater than about 2 $\mu$m, or no greater than about 1 $\mu$m, or no greater than about 0.75 $\mu$m, or no greater than about 0.5 $\mu$m, or no greater than about 0.1 $\mu$m. The method may comprise forming the infrared-reflective layer having a surface having an arithmetic average roughness $R_a$ or $S_a$ of no less than about 0.01 $\mu$m, for example, no less than about 0.05 $\mu$m, or no less than about 0.1 $\mu$m. The method may comprise forming the infrared-reflective layer having a surface having an arithmetic average roughness $R_a$ or $S_a$ from about 0.01 $\mu$m to about 5 $\mu$m, for example, from about 0.01 $\mu$m to about 4 $\mu$m, or from about 0.01 $\mu$m to about 3 $\mu$m, or from about 0.01 $\mu$m to about 2 $\mu$m, or from about 0.01 $\mu$m to about 1 $\mu$m, or from about 0.01 $\mu$m to about 0.75

$\mu$m, or from about 0.01 $\mu$m to about 0.5 $\mu$m, or from about 0.01 $\mu$m to about 0.1 $\mu$m. The surface of the infrared-reflective layer may be an external surface.

In examples in which the method comprises forming two or more infrared-reflective layers, the method may comprise forming the outermost infrared-reflective layer (i.e. the infrared-reflective layer comprising (e.g., forming) an external surface of the component) having a surface having the target arithmetic average roughness $R_a$ or $S_a$.

The roughness of the (e.g., external) surface of the infrared-reflective layer may be controlled by controlling the process of depositing the infrared-reflective layer. For example, the roughness of the (e.g., external) surface of the infrared-reflective layer may be controlled by controlling one or more deposition parameters (e.g., the deposition rate, gas or material supply rates, applied voltages, etc.) for repositing the infrared-reflective layer. Accordingly, the method may comprise controlling the deposition of the infrared-reflective layer such that a surface of the infrared-reflective layer has the target roughness.

Additionally or alternatively, the method may comprise polishing one or more of the substrate, the diffusion barrier layer (if present), the thermal barrier layer (if present) and/or the infrared-reflective layer. For example, the method may comprise polishing one or more of the substrate, the diffusion barrier layer (if present), the thermal barrier layer (if present) and/or the infrared-reflective layer such that a surface of the infrared-reflective layer has the target roughness. Polishing may comprise mechanical (i.e. abrasive) polishing, chemical-mechanical polishing and/or electropolishing (i.e. electrochemical polishing), dependent on the materials used and the target roughness. Mechanical (i.e. abrasive) polishing may comprise barrel polishing, for example, high energy barrel polishing. Electropolishing may comprise wet electropolishing or dry electropolishing.

In examples in which the method comprises forming two or more infrared-reflective layers, the method may comprise polishing each of the two or more infrared-reflective layers. Alternatively, the method may comprise polishing (e.g., only) the outermost infrared-reflective layer, i.e. the infrared-reflective layer comprising (e.g., forming) an external surface of the component.

The method may comprise controlling the deposition of the infrared-reflective layer and/or polishing one or more of the substrate, the diffusion barrier layer (if present), the thermal barrier layer (if present) and the infrared-reflective layer to achieve a mirror finish for the infrared-reflective layer.

The method may comprise forming the substrate prior to forming the infrared-reflective layer(s) or any intervening material layers (e.g., the diffusion barrier layer or the bond layer). The method may comprise forming the substrate by additive manufacturing (e.g., 3D-printing), for example, by selective laser sintering, selective laser melting, electron-beam melting, and the like. Alternatively, the method may comprise forming the substrate by casting, sintering, forming, machining, etc.

The method may comprise forming a plurality of cooling channels in the substrate. For example, the method may comprise forming plurality of cooling channels in the substrate, the plurality of cooling channels configured (e.g., sized, shaped and/or arranged) to generate a cooling film of air across the surface of the component in use.

The skilled person will appreciate that, except where mutually exclusive, a feature described in relation to any one of the above aspects may be applied *mutatis mutandis* to any other aspect. Furthermore, except where mutually exclusive, any feature described herein may be applied to any aspect and/or combined with any other feature described herein.

**Figures**

Embodiments will now be described by way of example only, with reference to the Figures, in which:

> **Figure 1** is a sectional side view of a gas turbine engine;
> **Figure 2** is a schematic cross-sectional diagram of a portion of a combustor wall;

>> **Figure 3** is a flowchart illustrating a method of manufacturing the combustor wall of Figure 2; and
>> **Figure 4** is a schematic cross-sectional diagram of a portion of a combustor wall.

**Detailed description**

*Gas turbine engine*

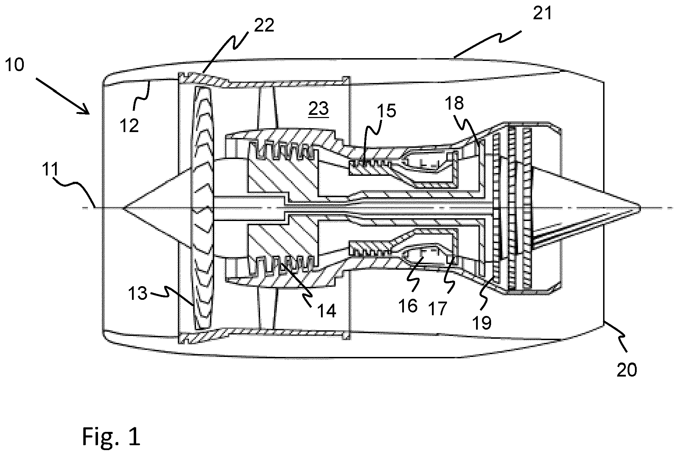

With reference to Figure 1, a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and the exhaust nozzle 20. A fan containment case 22 extends around the fan 13 inboard the nacelle 21.

The gas turbine engine 10 works in the conventional manner so that air entering the intake 12 is accelerated by the fan 13 to produce two air flows: a first air flow into the intermediate pressure compressor 14 and a second air flow which passes through a bypass duct 23 to provide propulsive thrust. The intermediate pressure compressor 14 compresses the air flow directed into it before delivering that air to the high-pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high-pressure compressor 15, intermediate pressure compressor 14 and fan 13, each by suitable interconnecting shaft.

Other gas turbine engines to which the present disclosure may be applied may have alternative configurations. By way of example such engines may have an alternative number of interconnecting shafts (e.g., two) and/or an alternative number of compressors and/or turbines. Further the engine may comprise a gearbox provided in the drive train from a turbine to a compressor and/or fan.

*Combustion chamber*

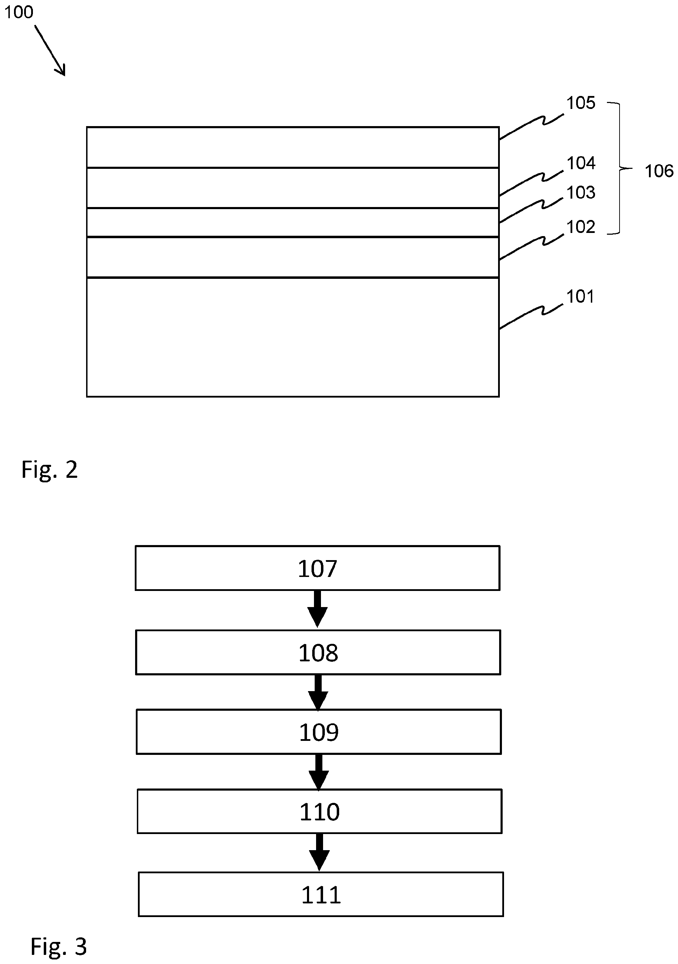

Figure 2 shows a sidewall 100 of combustion chamber 16 schematically in cross-section. The sidewall 100 comprises a substrate 101, a bond layer 102, a thermally grown oxide layer 103, a diffusion barrier layer 104 and an infrared-reflective layer 105. In this example, the substrate 101 is formed from a nickel-based superalloy. The bond layer 102 is formed from platinum aluminide and is about 2 $\mu$m thick. The thermally grown oxide layer 103 is formed predominantly from alumina and is about 500 nm thick. The diffusion barrier layer 104 is formed from yttria-stabilised zirconia (YSZ) and is about 10 $\mu$m thick. The infrared-reflective layer 105 is formed from a gold-platinum alloy and is about 1 $\mu$m thick. The external surface of the infrared-reflective layer 105 has been polished to a mirror finish and has an arithmetic average roughness $R_a$ of about 1 $\mu$m. Together, layers 102, 103, 104 and 105 form a stack 106 which shields the substrate 101 from infrared radiation produced on combustion of fuel in the combustion chamber 16.

The infrared-reflective layer 105 formed from the gold-platinum alloy has a low emissivity and thus a high reflectance for infrared radiation. The infrared reflective layer 105 therefore reflects most infrared radiation away from the sidewall 100 and thus shields the substrate 101 from heating caused by infrared radiation. The likelihood of the substrate 101 being exposed to excessively high temperatures during use is therefore reduced.

The stack 106 illustrated in Figure 2 may be manufactured by the method illustrated in Figure 3.

At step 107, bond layer 102 is deposited onto the substrate 101. Deposition of the bond layer 102 comprises deposition of a layer of aluminium having a thickness of about 1 $\mu$m, followed by deposition of a layer of platinum having a thickness of about 1 $\mu$m. The bond layer materials may be deposited by any suitable electroplating, thermal spraying, physical vapour deposition or chemical vapour deposition methods known in the art. The coated substrate 101 is then subjected to a heat treatment (for example, heating to about 950 °C for about 1 hour) such that the aluminium and platinum form an alloy.

At step 108, diffusion barrier layer 104 is deposited onto the bond layer 102. Deposition of the diffusion barrier layer 104 comprises deposition of a layer of yttria stabilised zirconia having a thickness of about 10 μm. The diffusion barrier layer may be deposited by any suitable electroplating, thermal spraying, physical vapour deposition or chemical vapour deposition method known in the art.

At step 109, infrared-reflective layer 105 is deposited onto the diffusion barrier layer 104. Deposition of the infrared-reflective layer 105 comprises deposition of a layer of platinum having a thickness of about 500 nm and a layer of gold having a thickness of about 500 nm. The infrared-reflective layer materials may be deposited by any suitable physical vapour deposition, chemical vapour deposition or electroplating method known in the art.

At step 110, the external surface of the infrared-reflective layer 105 is polished to achieve an arithmetic average roughness of about 1 μm. The infrared-reflective layer 105 may be polished by any suitable mechanical, chemical-mechanical or electropolishing method known in the art. For example, the infrared-reflective layer 105 may be polished using high energy barrel polishing or dry electropolishing.

In some examples, in addition to or instead of polishing the infrared-reflective layer 105, the substrate 101 and/or the diffusion barrier layer 104 is polished before deposition of the infrared-reflective layer 105. For example, the substrate 101 may be polished to achieve an arithmetic average roughness of about 1 μm and then subsequent layers may be deposited using conformal methods which maintain a low level of surface roughness.

At step 111, thermally grown oxide layer 103 grows during use of the component at elevated temperatures. The thermally grown oxide layer 103 forms on reaction of metal (e.g., aluminium) from the bond layer 102 reacting with oxygen passing through the diffusion barrier layer 104.

It will be appreciated that the infrared reflective layer 105 could be formed from any suitable material having a reflectance to infrared wavelengths of electromagnetic radiation no less than about 0.5 (and preferably no less than about 0.6, no less than about 0.7, no less than about 0.8, or no less than about 0.9). Equivalently, the material from which layer 105 is formed should have an emissivity less than about 0.4, for example, no greater than about 0.3 (and preferably no greater than about 0.2, or no greater than about 0.1, or no greater than about 0.05). Materials having suitable reflectances or emissivities include gold, platinum, silver, ruthenium, rhodium, palladium, osmium, iridium, beryllium, magnesium, aluminium, chromium, nickel, copper, zinc, palladium, silver, tin, tungsten, platinum, gold, lead, and/or any combination thereof. Use of a noble metal, such as gold, platinum, silver, ruthenium, rhodium, palladium, osmium, iridium, and/or any combination thereof, may be preferred to avoid oxidation of the material at elevated temperatures. In addition, the composition of the infrared-reflective layer 105 can be varied to achieve a melting temperature below the maximum temperature reached by said layer during use. For example, pure gold has a high reflectance for infrared radiation but a relatively low melting temperature; the melting temperature can be increased by alloying the gold with platinum or other elements. The composition of the alloy can be varied to achieve a desired combination of reflectance and/or emissivity and melting temperature.

It will be appreciated that the thickness of the infrared-reflective layer could be varied based on the material selected and the operating temperature. However, the infrared-reflective layer is typically from about 500 nm to about 50 μm thick. Preferably, the infrared-reflective layer is as thin as possible while also providing sufficient protection from infrared radiation.

It will be appreciated that the surface roughness of the infrared-reflective layer could be varied based on the material selected and the target reflectance and/or emissivity. However, the external surface of the infrared-reflective layer typically has a surface roughness $R_a$ or $S_a$ no greater than about 5 μm, and preferably as low as possible (e.g., no greater than about 1 μm). In some cases, therefore, the surface of the substrate is polished to achieve a surface roughness $R_a$ or $S_a$ no greater than about 5 μm, and preferably as low as possible (e.g., no greater than about 1 μm), prior to deposition of the stack 106.

It will be appreciated that the stack 106 could include two or more infrared-reflective layers 105, which may have different thicknesses and/or compositions. The two or more infrared-reflective layers 105 could be stacked on top of one another. The thicknesses and/or compositions of the two or more infrared-reflective layers 105 could be varied to achieve a target reflectance in the infrared.

The diffusion barrier layer 104 acts as a barrier to diffusion of nickel from the substrate 101 to the infrared-reflective layer 105 when the component is used at elevated temperatures. Without diffusion barrier layer 104, nickel may diffuse from the substrate to the infrared-reflective layer 105, where it may be oxidised at elevated temperatures, forming a nickel oxide scale. The nickel oxide scale tarnishes the surface of the infrared-reflective layer 105 and reduces the reflectance.

It will be appreciated that the diffusion barrier layer 104 could be replaced by any suitable material which inhibits diffusion of nickel, or any similar diffusive and reactive species, from the substrate. The diffusion barrier layer 104 may, for example, be formed from any suitable inert ceramic, such as a stabilised metal oxide or nitride. For example, the diffusion barrier layer 104 may be formed from titania, zirconia, hafnia, chromia or alumina stabilised with, for example, calcia, magnesia, ceria, yttria or scandia.

It will be appreciated that the thickness of the diffusion barrier layer could be varied based on the materials selected and the operating temperature. However, the diffusion barrier layer is typically from about 1 $\mu$m to about 2 mm thick, more typically from about 1 $\mu$m to about 100 $\mu$m thick. Preferably, the diffusion barrier layer is as thin as possible while also providing sufficient protection against nickel diffusion.

In some examples, use of a diffusion barrier layer is not necessary. For example, a diffusion barrier layer is not necessary where the substrate does not comprise nickel or other diffusive, and readily oxidisable, species.

In some examples, the diffusion barrier layer is or functions as a thermal barrier coating (TBC). A diffusion barrier layer which is or functions as a TBC may be relatively thick, for example, up to about 1 mm thick or up to about 2 mm thick.

The bond layer 102 bonds the substrate 101 and the diffusion barrier layer 104 together. The thermally grown oxide layer 103 also bonds the bond layer 102 and the diffusion barrier layer 104 together.

It will be appreciated that the bond layer 102 can be formed from any suitable material known in the art, dependent on the materials of the substrate and the diffusion barrier layer 104. The bond layer 102 is typically formed from metal. The bond layer 102 may, for example, be formed from nickel, cobalt, chromium, aluminium, silicon, platinum, yttrium and/or any combination thereof. For example, the bond layer 102 may be formed from a NiCrAlY alloy, a NiCoCrAlY alloy, a NiAl alloy, a PtAl alloy, and so on.

The composition of the thermally grown oxide layer 103 will depend on the material used to form the bond layer 102. For example, where the bond layer 102 contains aluminium, the thermally grown oxide layer 103 may contain or be formed from alumina. In some cases, due to the materials used for the bond layer 102 or the diffusion barrier layer 104, and/or the operating conditions, no thermally grown oxide layer 103 will form. Indeed, in some examples, it may be preferable that no thermally grown oxide layer 103 is formed.

It will be appreciated that the thicknesses of the bond layer 102 and the thermally grown oxide layer 103 (if present) could be varied based on the materials selected and the operating temperature. However, the bond layer 102 is typically from about 500 nm to about 200 $\mu$m thick. Preferably, the bond layer is as thin as possible while also providing sufficient bonding. The oxide layer 103, when present, may also have a thickness from about 500 nm to about 200 $\mu$m thick. Again, however, the oxide layer 103 is preferably as thin as possible.

In examples in which use a diffusion barrier layer or thermal barrier layer is not necessary, use of the bond layer 102 may also not be necessary. For example, it may be possible to deposit the infrared-reflecting layer 105 directly onto a substrate 101. This will depend on the materials used to manufacture the substrate 101 and the infrared-reflecting layer 105 and the operating temperatures.

It will be appreciated that the substrate 101 may be made from a material other than a nickel-based superalloy. For example, the substrate 101 may be made from a cobalt-based superalloy or an iron-based superalloy. Superalloys are particularly suited for use at the high temperatures to which gas turbine engine combustors are exposed.

*Other components*

It will be appreciated that the stack 106 described hereinabove may also be used to protect other types of components used in gas turbine engines. For example, the stack 106 may be used to protect a combustor cassette, a combustor tile, an injector, a turbine vane, a turbine blade, a turbine seal segment, an exhaust section component or a reheat section component. In addition, the stack 106 may be used to protect components for other types of engine, including rocket engines and ramjet engines. The stack 106 may be used to protect components for use in watercraft engines, spacecraft engines, projectile (e.g., rocket) engines or gas turbine power stations. Such components are all exposed to elevated temperatures in use, although not all such components may be exposed to the same high temperatures as found in the combustor.

In general, therefore, substrates for components for gas turbine engines need not be made of superalloys, but can also be made from ferrous alloys (e.g., cast iron or steel), non-ferrous alloys (e.g., aluminium-based alloys or titanium-based alloys), or composite materials (e.g., fibre-reinforced composite materials such as carbon fibre reinforced plastics, ceramic matrix composite materials, metal matrix composite materials and/or cermet composite materials). The substrate may be manufactured using any suitable methods known in the art, including casting, sintering, forming, machining and/or additive manufacturing (e.g., selective laser sintering, selective laser melting, electron-beam melting, and the like).

*Airflow cooling system*

The stack 106 (and, in particular, the infrared-reflective layer 105) may be combined with an airflow based cooling system to provide the substrate with enhanced heat protection. For example, an airflow based cooling system may provide the substrate with protection against convective heat transfer while the infrared-reflective layer 105 may provide the substrate with protection against radiative heat transfer.

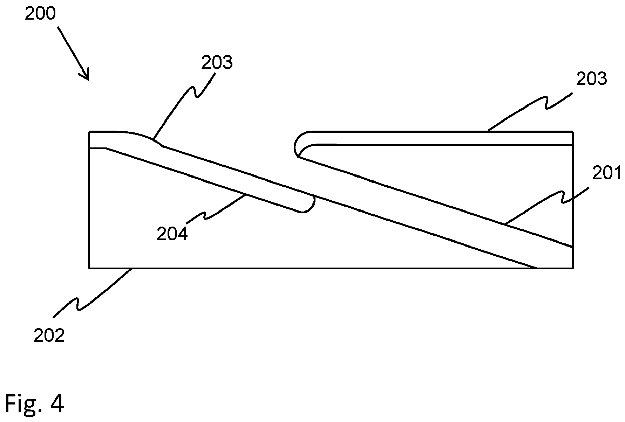

Figure 4 illustrates schematically in cross-section a portion of a wall 200 of a combustor of a gas turbine engine. The wall 200 includes an angled cooling channel 201, through which cooling air can be blown into the combustor during use to create a film of air across the combustor wall 200. The film of air convectively isolates the wall substrate 202 from hot gases inside the combustor.

In existing combustors, the wall substrate 202 can also be protected by a thermal barrier coating 203. In order to avoid the channel 201 being blocked by deposition of the thermal barrier coating, which can be up to 1 or 2 mm thick, the coating is typically deposited in a thermal barrier pocket or recess 204 in the exit region of the cooling channel. The need to include this recess 204 in the structure complicates the geometry of the combustor wall 200, which makes manufacture by additive manufacturing processes or laser drilling more challenging. In addition, the presence of the recess 204 in the exit region of each cooling channel necessitates a longer pitch between sequential rows of cooling channels across the wall surface, which can lead to reduced overall cooling effectiveness.

By replacing conventional barrier coating 203 with stack 106 (and, in particular, infrared-reflective layer 105), the overall coating thickness can be reduced significantly. This is because the infrared-reflective layer 105 shields the substrate from radiative heating, reducing the need for the further conductive shielding provided by a conventional barrier coating. In addition, by reducing the overall coating thickness, the depth of the recess 204 can be reduced or, indeed, the need for a recess 204 at all can be eliminated. This facilitates the use of more densely packed and therefore more efficient cooling channel geometries, which in turn further reduces the need for a thermal barrier coating.

*Variations*

It will be understood that the disclosure is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

**Claims**

1. A component (100) for a hot section of an engine (16), the component comprising a substrate (101) and an infrared-reflective layer (105) configured to reflect infrared radiation away from the substrate (101).

2. The component (100) according to Claim 1, wherein the infrared-reflective layer (105) has:

   (a) a spectral reflectance $R_\lambda$ of no less than about 0.5 when measured by spectrophotometry, according to ISO 15368:2021, using incident electromagnetic radiation having a wavelength $\lambda$ no less than about 500 nm and no greater than about 1 mm; and/or
   (b) a spectral emissivity $\varepsilon_\lambda$ of less than about 0.4, for example no greater than about 0.3, when measured using incident electromagnetic radiation having a wavelength $\lambda$ no less than about 500 nm and no greater than about 1 mm.

3. The component (100) according to Claim 1 or Claim 2, wherein the infrared-reflective layer (105) comprises at least one infrared-reflective material comprising one or more of gold, platinum, silver, ruthenium, rhodium, palladium, osmium, iridium, and/or any combination thereof, for example, wherein the at least one infrared-reflective material comprises gold and/or platinum.

4. The component (100) according to any one of the preceding claims, wherein the infrared-reflective layer (105) has a surface having an arithmetic average roughness $R_a$ or $S_a$ of no greater than about 5 $\mu$m, for example, no greater than about 1 $\mu$m, or no greater than about 0.5 $\mu$m, or no greater than about 0.1 $\mu$m.

5. The component (100) according to any one of the preceding claims, wherein the infrared-reflective layer (105) has a thickness of no greater than about 50 $\mu$m, for example, no greater than about 25 $\mu$m, or no greater than about 10 $\mu$m.

6. The component (100) according to any one of the preceding claims, wherein the component (100) comprises a diffusion barrier layer (104) between the substrate (101) and the infrared-reflective layer (105), optionally wherein:

   (a) the diffusion barrier layer (104) comprises a ceramic, for example, wherein the diffusion barrier layer comprises a metal oxide, such as titania, zirconia, hafnia, chromia or alumina, or a metal nitride, optionally wherein the metal oxide or metal nitride is stabilised, for example, by an alkaline earth metal oxide and/or a rare earth metal oxide such as calcia, magnesium, ceria, yttria or scandia;
   (b) the diffusion barrier layer (104) has a thickness of no greater than about 2 mm, for example, no greater than about 1 mm, or no greater than about 100 $\mu$m, or no greater than about 50 $\mu$m; and/or
   (c) the infrared-reflective layer (105) is formed directly on the diffusion barrier layer (104).

7. The component (100) according to any one of the preceding claims, wherein the infrared-reflective layer (105) is one of two or more infrared-reflective layers (105) configured to reflect infrared radiation away from the substrate.

8. The component (100) according to Claim 7, wherein the component (100) comprises a bond layer (102) between the substrate (101) and the diffusion barrier layer (104), the bond layer (102) being configured to bond the diffusion barrier layer (104) to the substrate (101), optionally wherein:

   (a) the bond layer (102) comprises at least one of nickel, cobalt, chromium, aluminium, silicon, platinum, yttrium and/or any combination thereof, for example, wherein the bond layer (102) comprises an alloy comprising at least one of nickel, cobalt, chromium, aluminium, silicon, platinum, yttrium and/or any combination thereof, for example, wherein the bond layer (102) comprises a NiCrAlY alloy, a NiCoCrAlY alloy, a NiAl alloy, a PtAl alloy, and/or any combination thereof;
   (b) the component (100) comprises an oxide layer (103) between the bond layer (102) and the diffusion barrier layer (104); and/or
   (c) the bond layer (102) has a thickness of no greater than about 200 $\mu$m, for example, no greater than about 100 $\mu$m, or no greater than about 50 $\mu$m, or no greater than about 10 $\mu$m, or no greater than about 5 $\mu$m.

9. The component (100) according to any one of the preceding claims, wherein the component (100) is:

   (a) a component (100) for a combustor section of a gas turbine engine (16), for example, a combustor or part thereof, a combustor cassette, a combustor tile, or an injector;
   (b) a component (100) for a turbine section of a gas turbine engine (16), for example, a turbine vane, a turbine blade, or a turbine seal segment;
   (c) a component (100) for an exhaust section of a gas turbine engine (16);
   (d) a component (100) for a reheat section of a gas turbine engine (16);
   (e) a component (100) for a reaction engine such as a rocket engine; or
   (f) a component (100) for a ramjet engine.

10. A method of manufacturing a component (100) for a hot section of an engine (16), the method comprising forming an infrared-reflective layer (105) on a substrate (101), the infrared-reflective layer (105) configured to reflect infrared radiation away from the substrate (101).

11. The method according to Claim 10, wherein the method comprises forming the infrared-reflective layer (105) having:

   (a) a spectral reflectance $R_\lambda$ of no less than about 0.5 when measured by spectrophotometry, according to ISO 15368:2021, using incident electromagnetic radiation having a wavelength $\lambda$ no less than about 500 nm and no greater than about 1 mm; and/or
   (b) a spectral emissivity $\varepsilon_\lambda$ of less than about 0.4, for example no greater than about 0.3, when measured using incident electromagnetic radiation having a wavelength $\lambda$ no less than about 500 nm and no greater than about 1 mm.

12. The method according to Claim 10 or Claim 11, wherein forming the infrared-reflective layer (105) comprises depositing at least one infrared-reflective material comprising one or more of gold, platinum, silver, ruthenium, rhodium, palladium, osmium, iridium, and/or any combination thereof, for example, wherein the at least one infrared-reflective material comprises gold and/or platinum.

13. The method according any one of Claims 10 to 12, wherein the method comprises forming a diffusion barrier layer (104) on the substrate (101) and forming the infrared-reflective layer (105) on the diffusion barrier layer (104), optionally wherein:

   (a) the diffusion barrier layer (104) comprises a ceramic, for example, wherein the diffusion barrier layer (104) comprises a metal oxide, such as titania, zirconia, hafnia, chromia or alumina, or a metal nitride, optionally wherein the metal oxide or metal nitride is stabilised, for example, by an alkaline earth metal oxide and/or a rare earth metal oxide such as calcia, magnesium, ceria, yttria or scandia;
   (b) the diffusion barrier layer (104) has a thickness of no greater than about 2 mm, for example, no greater than about 1 mm, or no greater than about 100 $\mu$m, or no greater than about 50 $\mu$m; and/or
   (c) the infrared-reflective layer (105) is formed directly on the diffusion barrier layer (104).

14. The method according to any one of Claims 10 to 13, wherein the method comprises forming a bond layer (102) on the substrate (101) and forming the diffusion barrier layer (104) on the bond layer (102), optionally wherein:

   (a) the bond layer (102) comprises at least one of nickel, cobalt, chromium, aluminium, silicon, platinum, yttrium and/or any combination thereof, for example, wherein the bond layer comprises an alloy comprising at least one of nickel, cobalt, chromium, aluminium, silicon, platinum, yttrium and/or any combination thereof, for example, wherein the bond layer (102) comprises a NiCrAlY alloy, a NiCoCrAlY alloy, a NiAl alloy, a PtAl alloy, and/or any combination thereof;

(b) the component (16) comprises an oxide layer (103) between the bond layer (102) and the diffusion barrier layer (104); and/or

(c) the bond layer (102) has a thickness of no greater than about 200 μm, for example, no greater than about 100 μm, or no greater than about 50 μm, or no greater than about 10 μm, or no greater than about 5 μm.

15. The method according to any one of Claims 10 to 14, wherein the method comprises polishing the substrate (101) and/or the infrared-reflective layer (105) and/or, if present, the barrier layer (104), optionally wherein the method comprises controlling the polishing such that a surface of the infrared-reflective layer (105) has an arithmetic average roughness $R_a$ or $S_a$ of no greater than about 5 μm, for example, no greater than about 1 μm, or no greater than about 0.5 μm, or no greater than about 0.1 μm.

Fig. 1

100

| 105 |
|---|
| 104 |
| 103 |
| 102 |
| 101 |

106

Fig. 2

| 107 |
|---|
| 108 |
| 109 |
| 110 |
| 111 |

Fig. 3

Fig. 4

Europäisches
Patentamt

European
Patent Office

Office européen
des brevets

# EUROPEAN SEARCH REPORT

Application Number

EP 24 16 5792

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/048305 A1 (ACKERMAN JOHN FREDERICK [US] ET AL) 3 March 2005 (2005-03-03) * paragraphs [0013], [0031] - paragraphs [0033], [0037], [0040]; claims 11,12; figure 5 * | 1-15 | INV. F23R3/00 |
| X | DATABASE WPI Week 199644 Thomson Scientific, London, GB; AN 1996-439380 XP002811960, & JP H08 217576 A (HITACHI LTD) 27 August 1996 (1996-08-27) * abstract * * paragraph [0034] - paragraph [0037]; figure 1 * | 1-3,5, 8-12,14 | |
| X | US 5 851 679 A (STOWELL WILLIAM R [US] ET AL) 22 December 1998 (1998-12-22) * column 3, line 7 - column 4, line 17; claims; figure 2 * | 1-14 | |
| X | US 2017/275766 A1 (NAIK SUBHASH KIRSHNA [US] ET AL) 28 September 2017 (2017-09-28) * paragraph [0019] - paragraph [0029]; claims; figure 3 * | 1-15 | TECHNICAL FIELDS SEARCHED (IPC) F23R C23C |
| X | US 2004/258946 A1 (ALLEN WILLIAM P [US] ET AL) 23 December 2004 (2004-12-23) * paragraph [0015] - paragraph [0022]; claims; figure 2 * | 1-15 | |

The present search report has been drawn up for all claims

| Place of search | Date of completion of the search | Examiner |
|---|---|---|
| The Hague | 30 July 2024 | Mootz, Frank |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 5792

This annex lists the patent family members relating to the patent documents cited in the above-mentioned European search report.
The members are as contained in the European Patent Office EDP file on
The European Patent Office is in no way liable for these particulars which are merely given for the purpose of information.

30-07-2024

| Patent document cited in search report | Publication date | Patent family member(s) | | Publication date |
|---|---|---|---|---|
| US 2005048305 A1 | 03-03-2005 | NONE | | |
| JP H08217576 A | 27-08-1996 | NONE | | |
| US 5851679 A | 22-12-1998 | NONE | | |
| US 2017275766 A1 | 28-09-2017 | US | 2012195744 A1 | 02-08-2012 |
| | | US | 2017275766 A1 | 28-09-2017 |
| | | WO | 2012092217 A1 | 05-07-2012 |
| US 2004258946 A1 | 23-12-2004 | AT | E468425 T1 | 15-06-2010 |
| | | EP | 1273680 A2 | 08-01-2003 |
| | | JP | 2003055756 A | 26-02-2003 |
| | | SG | 102661 A1 | 26-03-2004 |
| | | US | 2003008170 A1 | 09-01-2003 |
| | | US | 2004258946 A1 | 23-12-2004 |

EPO FORM P0459

For more details about this annex : see Official Journal of the European Patent Office, No. 12/82